# EUROPEAN PATENT SPECIFICATION

(11) **EP 3 919 797 B1**
(45) Date of publication and mention of the grant of the patent: **15.11.2023**
(21) Application number: 21173530.3
(22) Date of filing: 12.05.2021
(51) Int. Cl.: F16K 31/524, F16K 31/528, F16K 31/56, E03C 1/04

(54) **ABLUTIONARY FITTING CONTROL**
STEUERUNG EINER ARMATUR FÜR RITUELLE WASCHUNG
COMMANDE DE RACCORD DE TUYAUTERIE POUR ABLUTIONS

(30) Priority: 26.05.2020 GB 202007802
(43) Date of publication of application: 08.12.2021
(73) Proprietor: Kohler Mira Limited, Cheltenham, Gloucestershire GL52 5EP (GB)
(72) Inventor: LEA, Benjamin, Gloucester, Gloucestershire GL52 5EP (GB); GRIFFITHS, Daniel, Paul, Gloucester, Gloucestershire GL52 5EP (GB); HOBBS, Mitchell, Connor, Cheltenham, Gloucestershire GL52 5EP (GB)
(74) Representative: Barker Brettell LLP

(56) References cited:
- CN-B- 104 923 418
- CN-U- 203 948 677
- DE-A1-102013 105 389
- DE-A1-102017 105 200
- DE-U1-202016 001 106
- FR-A3- 3 046 653
- US-A1- 2006 096 642

## Description

The present disclosure relates to a controller for an ablutionary fitting, and more specifically to a push-button actuator arranged to control such a fitting. In particular, but not exclusively, the present disclosure relates to a push-button actuator for use in an ablutionary fitting such as a shower. The present disclosure also relates to an ablutionary fitting comprising such a push-button actuator.

Ablutionary fittings, such as showers, generally include at least one outlet port, and often include multiple outlet ports each feeding a different outlet device with water. For example, a first outlet device may comprise an overhead showerhead, and a second outlet device may comprise a handheld unit.

Different types of diverter valves are known, which allow one or more of the outlet devices to be selected at a time. In other examples, each outlet may include a separate valve to separately control the flow of water to each device. Control devices are used to open and close the one or more valves so as to control water flow. FR 3046653 discloses a push button valve comprising: a seal assembly including a seat having a first cavity, a second cavity, and a spring biased bar in the first cavity; a hollow element movable on the bar; and a sealing ring on the hollow member; a rod in the second cavity and comprising a sealing element, and a sleeve movable on the rod and fixed on the seat. A second spring is placed on the rod and biased between one end of the cylinder and the sleeve, and a third spring in the cylinder and having one end in bias against the other end of the rod. CN 104923418 discloses a button-switched water distributing device comprising a first biasing member and a second biasing member disposed at opposing ends of the device and separated by a middle chamber. DE 202016001106 discloses valve actuation device, with a hand control element and a valve that can be actuated via the hand control element. US 2006/096642 discloses a switching valve assembly for use in a mixing faucet. CN203948677 discloses a button type water segregator comprising a hand wheel, wherein a first spring base is arranged in the hand wheel; a button arranged on the first spring base where the button is connected with a switching rod in an inserting way; and a sealing assembly. DE 10 2017 105 200 A1 discloses a sanitary valve comprising a controller according to the preamble of claim 1,
in which a movable membrane of a main valve is controlled with a push-push mechanism. The valve has at least three discrete switching positions of the main valve, controlled via a pilot valve. The valve is elongate in shape, with a cam member located between a button contact surface (the contact surface being above the cam member) and multiple biasing members (the biasing members being located below, and in one case slightly within and extending below, the cam member)
Opening and closing valves that control water flow typically requires overcoming a water pressure, which can vary between 0.1 and 10 bar in the case of a mains water supply, with 3 bar being typical. The magnitude and direction of the force required to open the valves can reduce the design freedom when positioning the control means in relation to the valves. Often, the control means must be located along a straight line from the actuator of the valve to allow transmission of the required force by a rigid connection mechanism.

It would be beneficial to mitigate or at least reduce one or more of the problems associated with the prior art. According to a first aspect of the invention, there is provided an ablutionary fitting controller as claimed in claim 1.

The ablutionary fitting controller may be a shower controller - the push-button actuator may be arranged to control flow (e.g. temperature and/or volume of water flow) to a showerhead.

The ablutionary fitting controller may be a tap controller.

The ablutionary fitting controller may be used to actuate a valve and may therefore be referred to as a valve controller.

The longitudinal direction may be at least substantially perpendicular to the contact surface.

A biased over-travel member as described used within an ablutionary fitting controller push-button design may allow tolerance for the position of the valve relative to the button. Automatic length adjustment of the first biasing member may allow variations in relative position of the over-travel member and valve connection member to be accommodated without any user or installer intervention, and/or a suitable first biasing member may be selected and used based on the relative spacing, so allowing even broader tolerance. The over-travel member may contact a part of a valve directly, so as to actuate the valve, in which case the valve connection member may be a part of the valve. In other embodiments, the valve itself may be spaced from the over-travel member and an intervening connection member, such as a lever or arm, may be provided to transfer the movement from the push-button actuator to the valve. The use of a suitable intervening connection member, for example a suitably pivoted arm, may allow a relatively small button movement to be converted into a larger valve movement, and/or may provide greater flexibility in positioning of the push-button actuator relative to the valve.

Additionally or alternatively, an ablutionary fitting controller as described may reduce the required over-travel distance for the push-button actuator to be latched and unlatched (i.e. to enter or leave the first or second position in which it is held) as compared to known designs for such controllers.

The mechanism of the push-button actuator may be similar to mechanisms known in the field of pen design ("clicker mechanisms"). The inventors appreciated that reducing/minimising the button travel may be beneficial for user experience, and/or in producing a more slim-line design (e.g. to fit a push-button actuator into a narrow part of a shower controller or for aesthetic reasons) - in pen clicker mechanisms, there is a significant "dead" / unusable part of the travel to allow the part or all of the actuator member to move past the latch (button housing). Use of an over-travel member with a loaded first biasing member (e.g. an at least partially compressed coil spring) may avoid losing this travel to clearance in the mechanism - a larger proportion (if not all) of the button travel may therefore be used to actuate the valve.

The first biasing member may be selected to have a slightly greater spring force than the actuation force of the valve it is arranged to operate.

The button may be biased away from the valve connection member by a second biasing member.

The over-travel member may be biased towards the valve connection member by the first biasing member.

The button and button housing each comprise one or more surfaces inclined with respect to the longitudinal direction. Optionally, the surfaces may be separated by one or more of (i) gaps or steps (longitudinally, radially, and/or circumferentially) between them and (ii) differences in angle between them.

An ablutionary fitting controller as described may reduce the required over-travel distance for the cam member to be latched and unlatched on the button housing as compared to known designs for such controllers including cam members.

In various embodiments, the use of the four overlapping components - e.g. button housing, button, cam member and over-travel member - between all pairs of which there can be relative longitudinal movement, may allow more space-effective use to be made of a set longitudinal distance.

The inclined surfaces of the button housing may cause the cam member to rotate as it moves in the longitudinal direction towards the contact surface, pushed by the first biasing member (e.g. due to a reaction force from the valve connection member).

The inclined surfaces of the button interact with the inclined surfaces of the cam member when the force is applied / when the button is pushed (movement of the cam member in a first direction along the longitudinal direction - e.g. downwards).

The inclined surfaces of the button housing interact with the inclined surfaces of the cam member when the force / button is released (movement of the cam member in a second, opposite, direction along the longitudinal direction - e.g. upwards).

The push-button actuator is arranged to move the valve between a first position and a second position, to start and stop water flow to the outlet. The shower controller may therefore be an on/off controller for a shower or tap.

The first and second biasing members may be coaxial springs. The first biasing member may have a smaller diameter than the second.

The first biasing member may be selected to have a slightly greater spring force than an actuation force of the valve it is arranged to operate (the spring force being, for example, 10% to 20% greater than the actuation force of the valve).

The button may be at least partially hollow and may be arranged to receive at least a portion of the cam member therewithin.

In a position in which the over-travel member is arranged to push the valve connection member, a majority of the cam member may extend out of the button and towards the valve connection member / away from the button contact surface. By contrast, in a position in which the valve connection member is not arranged to be pushed by the over-travel member, the majority of the cam member may lie within the button.

The cam member may have a lip on an end region of the cam member closest to the valve connection member / furthest from the button contact surface. The lip may be arranged to prevent the whole of the cam member from entering into the button (for example pushed by the first biasing member), thereby limiting movement of the cam member with respect to the button.

The cam member may be at least partially hollow, and may be arranged to receive at least a portion of the over-travel member therewithin.

In a position in which the valve connection member is arranged to be pushed by the over-travel member (e.g. one of the first position and the second position), a smaller proportion of the over-travel member may extend out of the cam member towards the valve connection member than in a position in which the valve connection member is not arranged to be pushed by the over-travel member (e.g. the other of the first position and the second position).

The over-travel member may have a lip on an end region of the over-travel member furthest from the contact surface of the button. The lip may be arranged to prevent the whole of the over-travel member from entering into the button and/or into the cam member, thereby limiting movement of the over-travel member with respect to the button.

The cam member and over-travel member may comprise inter-engaging formations arranged to limit how far out of the cam member the over-travel member can move.

The first biasing member may be arranged to bias the over-travel member with respect to the cam member.

The first biasing member may be a coil spring encircling at least a portion of the length of the over-travel member, and may lie at least partially within the cam member.

The over-travel member, first biasing member, and cam member may be coaxial. The shared axis may be parallel to the longitudinal direction. The shared axis may be perpendicular to, and optionally central with respect to, the button contact surface. The shared axis may extend between the button contact surface and the intended location of the valve connection member.

In embodiments in which the first and second biasing members are coaxial, the over-travel member, first biasing member, and cam member may be coaxial around the same axis.

The button and the button housing may be arranged not to rotate in use, whereas the cam member, the first biasing member, and the over-travel member may be arranged to rotate together, relative to the button and button housing.

The cam member may comprise a cog-shaped portion with a plurality of teeth. Each tooth may provide one of the surfaces inclined with respect to the longitudinal direction. Each inclined surface may have an extent in the longitudinal direction of less than 60%, 50%, 40%, or 30% of the tooth width in a circumferential direction.

According to a second aspect, there is provided an ablutionary fitting comprising:
a body;
an outlet, the outlet having a valve arranged to open and close the outlet; and
an ablutionary fitting controller as described with respect to the first aspect and arranged to actuate the valve.

The ablutionary fitting may be a shower. The ablutionary fitting controller may be referred to as a shower controller. The push-button actuator of the shower controller may be arranged to control fluid flow through a showerhead of the shower.

The ablutionary fitting may be a tap (faucet). The ablutionary fitting controller may be referred to as a tap controller. The push-button actuator of the tap controller may be arranged to control fluid flow through the tap.

It will be appreciated that features discussed in relation to any particular aspect may be applied to any other aspect, where appropriate.

Embodiments of the invention will now be described, by way of example only, with reference to the accompanying drawings, in which:
**Figure 1** schematically illustrates a shower apparatus;
**Figure 2** is a schematic cross-sectional view of a push-button actuator in a first position;
**Figure 3** is a set of schematic cross-sectional views of the push-button actuator in first, second, and third positions;
**Figure 4** is a set of schematic cross-sectional views of the push-button actuator in situ in a shower controller in first, second, and third positions;
**Figure 5** is a perspective view of a button body;
**Figure 6** is a cross-sectional view of the button body of Figure 5, in a longitudinal plane;
**Figure 7** is a perspective view of a cam member;
**Figure 8** is a cross-sectional view of the cam member of Figure 7, in a longitudinal plane;
**Figure 9** is a pair of perspective views of a button housing;
**Figure 10** is a cross-sectional view of the button housing of Figure 9, in a longitudinal plane;
**Figure 11** is a plan view of the button housing shown in Figure 9 (in the orientation shown in Figure 2);
**Figure 12** is an underneath view of the button housing shown in Figure 9 (in the orientation shown in Figure 2);
**Figure 13** is a perspective view of an over-travel member;
**Figure 14** is a cross-sectional view of the over-travel member of Figure 13, in a longitudinal plane;
**Figure 15** is an exploded perspective view of the push-button actuator shown in Figure 2;
**Figure 16** is an exploded perspective view of a controller comprising two push-button actuators as shown in Figure 2;
**Figure 17** provides two sets of perspective views of the push-button actuator of Figure 2 in three different positions;
**Figure 18** provides cross-sectional, perspective, and underneath views of the push-button actuator of Figure 2 in three different positions;
**Figure 19** is a schematic cross-sectional view of a push-button actuator not being part of the claimed invention and different from that shown in the above Figures, in a first position;
**Figure 20** is a cross-sectional view of a portion of the button housing of the push-button actuator shown in Figure 19;
**Figure 21** provides cross-sectional, perspective, and underneath views of the push-button actuator of Figure 19 in the first position;
**Figure 22** provides cross-sectional, perspective, and underneath views of the push-button actuator of Figure 19 in a second position;
**Figure 23** provides cross-sectional, perspective, and underneath views of the push-button actuator of Figure 19 in a third position;
**Figure 24** is a schematic cross-sectional view of a push-button actuator not being part of the claimed invention and different from that shown in the above Figures, in a first position;
**Figure 25** provides cross-sectional, perspective, and underneath views of the push-button actuator of Figure 24 in the first position;
**Figure 26** provides cross-sectional, perspective, and underneath views of the push-button actuator of Figure 24 in a second position;
**Figure 27** provides cross-sectional, perspective, and underneath views of the push-button actuator of Figure 24 in a third position;
**Figure 28** is a perspective view of the actuator member of the push-button actuator of Figure 24; and
**Figure 29** provides a plan view and three side views of the button housing of the push-button actuator of Figure 24.

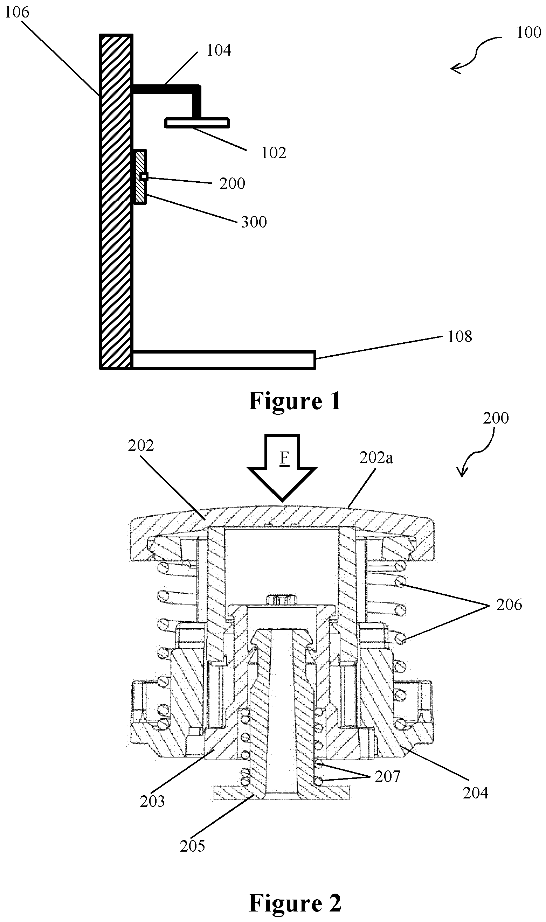

Figure 1 shows a shower apparatus 100 comprising a showerhead 102 fed by feedpipe 104 and controlled by a shower controller 300. In the example shown, the showerhead 102 is a wall-mounted showerhead, mounted on the wall 106. In alternative embodiments, the showerhead 102 may be a ceiling-mounted showerhead, a shower handset, or the likes.

In the example shown, the shower controller 300 is mounted on the wall 106, and below and to one side of (behind, from a user perspective) the showerhead 102. In alternative embodiments, the shower controller 300 may be differently mounted.

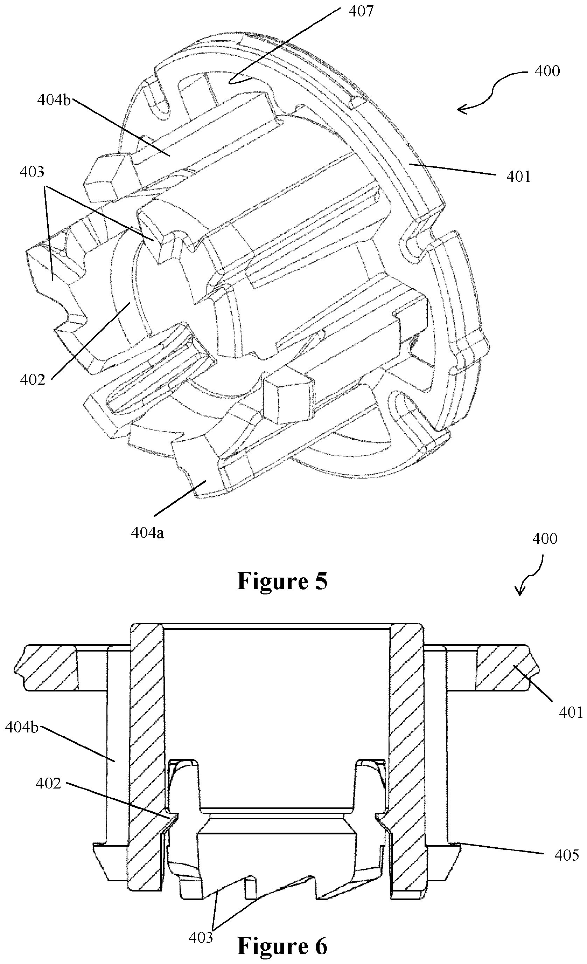

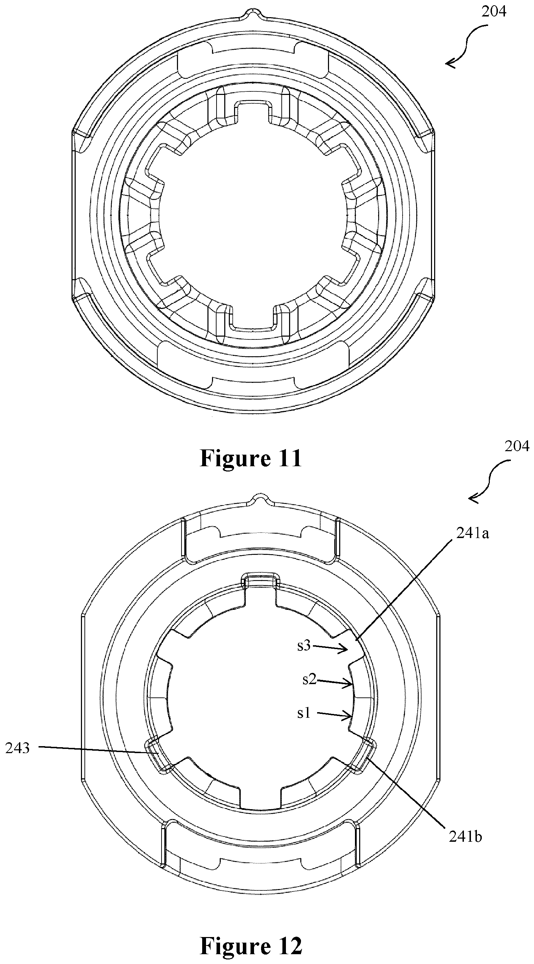

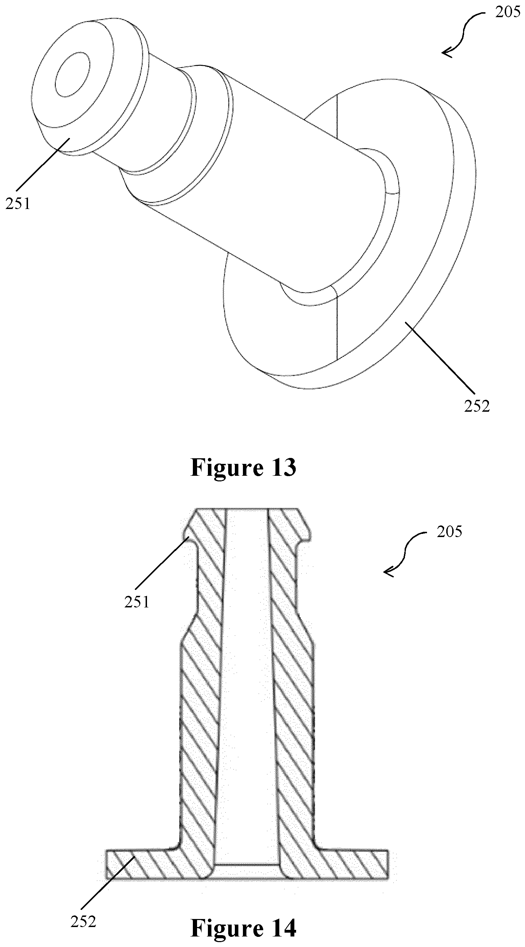

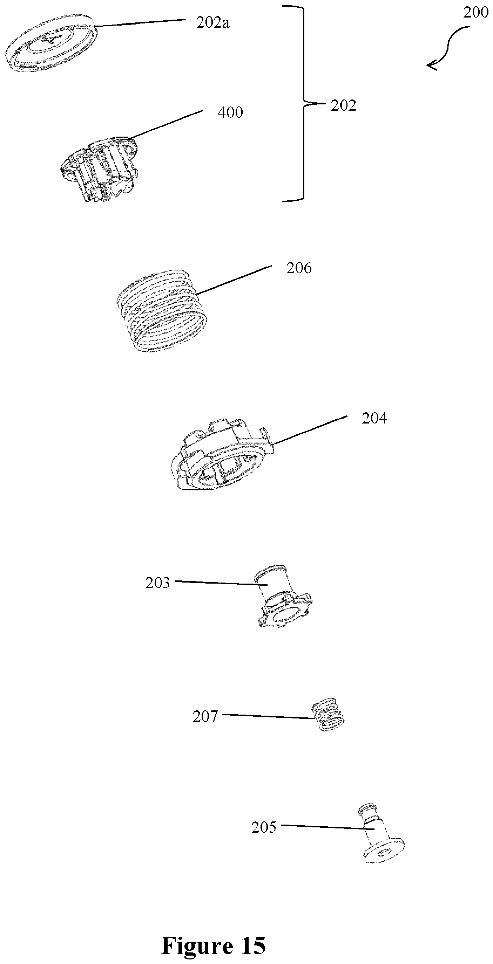

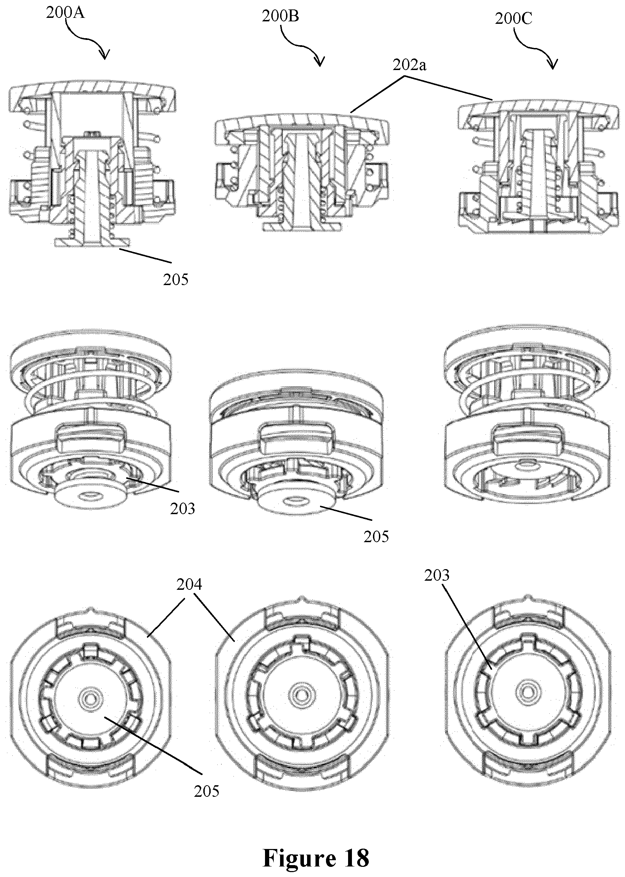

The shower controller 300 comprises a push-button actuator 200. Whilst the invention is primarily described in relation to the specific push-button actuator 200 shown in Figures 2 to 18, this specific mechanism is described by way of example only, and the invention may be applied more generally, as described in relation to the later figures, below.

The push-button actuator 200 of the embodiment described with respect to Figures 2 to 18 is arranged to control a flow of water to the showerhead 102, via the feedpipe 104, the showerhead 102 being an example of an outlet. In the embodiment being described, the push-button actuator 200 is arranged to function as an on/off button, stopping and starting water flow through the showerhead 102. In alternative or additional embodiments, the push-button actuator 200 may be used to select between various different flow rates, and/or to adjust temperature. A single push-button actuator 200 is shown on the shower controller 300 of the illustrated embodiment; multiple push-button actuators 200 may be provided on other controllers. Multiple showerheads 102 may be provided in some embodiments, and one or more push-button actuator 200 may be provided for each showerhead.

In the illustrated embodiment, the shower controller 300 comprises a recess 306 arranged to accommodate the push-button actuator 200 and a casing 304 arranged to provide a waterproof outer surface.

The push-button actuator 200 is arranged to mechanically actuate a valve (not shown) so as to control a flow of water to an outlet (the showerhead 102).

The push-button actuator 200 comprises a button 202. The button 202 has an outer surface 202a arranged to be accessible by a user in use. The outer surface 202a of the button is the right-most surface in the orientation shown in Figure 1 and the uppermost surface in the orientation shown in Figures 2, 3 and 4. The skilled person would appreciate that position will vary in different installations. In the embodiment shown, the outer surface 202a is arranged to be touched by a user. In some alternative embodiments, the button 202 may be covered by a flexible membrane or the likes - in such embodiments, the button 202 is arranged to be able to be pushed by a user through the flexible, or otherwise moveable, cover. The cover transmits an applied force in the region of the outer surface 202a to the button 202. The outer surface 202a may therefore also be referred to as a contact surface 202a, as it is arranged to be pressed so as to actuate the button 202 (whether or not it is directly touched by a user).

The button 202 is arranged to be moved in a longitudinal direction by an applied force. The force may be applied by a user, for example by a user pressing the button with a finger or implement. The arrow labelled "F" in Figure 2 indicates a direction of an applied force, and the movement direction in response to the applied force.

The button 202 additionally comprises a button body 400. In the embodiment shown, the outer surface 202a of the button 202 is provided by a separable cap mounted on the button body 400. In other embodiments, the outer surface 202a may be integral with the button body 400.

The button body 400 of the illustrated embodiment has a rim 401 arranged to engagingly receive the cap 202a providing the outer surface. The rim 401 is wider than the rest of the body 400 in the embodiment shown, but may be differently sized or shaped in other embodiments. In the embodiment shown, the cap 202a is substantially circular, and the rim 401 likewise, so providing a button 202 with a circular appearance for a user. Different shapes may be provided in different embodiments.

Extending away from the rim 401, the body 400 has a substantially tubular shape, with various sloped surfaces and channels to facilitate interactions with other actuator components, as described in more detail below.

The body 400 is at least substantially hollow, defining an at least substantially cylindrical volume therewithin. In the embodiment shown, the body 400 has an inwardly-directed rim or lip 402. The inner rim 402 extends inwardly within the body 400, reducing the internal diameter in the vicinity of the inner rim 402. The inner rim 402 extends most of the way around the inner circumference of the body in the illustrated embodiment, with three breaks. The inner rim 402 may be continuous, or may have more breaks, in other embodiments. In the embodiment shown, the inner rim 402 has a first surface facing the button's outer surface 202. The first surface is at least substantially perpendicular to the longitudinal direction in the illustrated embodiment. In the embodiment shown, the inner rim 402 has a second surface facing away from button's outer surface 202. The second surface is angled, particularly by around 45° in the example shown, with respect to the longitudinal direction. The rim 402 therefore has a triangular cross-section in the embodiment shown. In the embodiment shown, the inner rim 402 is substantially circular.

In alternative embodiments, the inner rim 402 may be differently shaped, and/or may comprise a series of separate protrusions instead of a continuous rim. In still other embodiments, no rim may be present.

In the illustrated embodiment, the inner rim 402 is spaced from the contact surface 202 by around 60 to 80% of the length of the body 402, and for example may be located around two thirds to three quarters of the way along the longitudinal axis of the button 400, in the direction away from the contact surface 202. The inner rim 402 may be differently positioned in other embodiments.

The body 400 further comprises a plurality of longitudinal ridges 404, or ribs, spaced around the outer circumference of the body 400. In the illustrated embodiment, there are a total of six ridges 404, three 404a being substantially cuboid in shape and aligned in the longitudinal direction, and three 404b being mostly substantially cuboid in shape, but with a head, or clip, in an end region of the button further from the contact surface 202a. The clip head of each of the ridges 404b is substantially trapezoidal, such that a radially inward surface of each ridge 404b is at least substantially parallel to the longitudinal direction for the full length of the ridge 404b, but the outward surface of each ridge is stepped, so providing a ledge 405 facing back towards the contact surface 202a.

The body 400 further comprises a plurality of sloped surfaces 403. The surfaces 403 are helically pitched, and inclined with respect to the longitudinal direction. The inclined surfaces 403 face away from the contact surface 202a, and are at the far end of the button from the contact surface 202a in the embodiment shown.

The push-button actuator 200 comprises a cam member 203. The cam member 203 is arranged to be pushed by a force, F, in the longitudinal direction, by movement of the button 202. The cam member 203 is mounted on the button 202, and more specifically at least partially within the button body 400 in the embodiment shown. The cam member 203, like the button body 400, is at least substantially tubular in the embodiment shown.

The cam member 203 has a first end region arranged to be nearer the outer surface 202a (contact surface 202a) of the button 202 in use and a second end region arranged to be further from the outer surface 202a of the button 202 in use.

The cam member 203 extends in the longitudinal direction away from the outer surface 202a of the button 202 in use. The cam member 203 of the embodiment being described is coaxial with the button 202, and lies at least partially within the body 400 of the button 202.

The cam member 203 of the illustrated embodiment is at least substantially hollow, defining an at least substantially cylindrical volume therewithin.

The cam member 203 of the illustrated embodiment has a substantially tubular portion 230 extending from the first end region towards the second end region. The substantially tubular portion 230 has an outer rim 231, with a wider diameter than the rest of the substantially tubular portion 230. The rim 231 is located in the first end region, optionally forming the first end of the cam member 203.

In the embodiment being described, the rim 231 of the cam member 203 is arranged to lie within the button 202, and between the inner rim 402 of the body 400 of the button 202 and the contact surface 202a of the button 202 in use. The inner rim 402 of the body 400 serves to limit movement of the cam member 203 away from the contact surface 202a, and to prevent the cam member 203 from slipping out of the button 202. The rim 231 of the cam member 203 rests on the inner rim 402 of the body 400 of the button 202, defining a maximum displacement between the rim 231 of the cam member 203 and the contact surface 202a of the button 202.

The cam member 203 additionally comprises an inner rim 233. The inner rim 233 is sloped, and extends radially inward and in the longitudinal direction arranged to be towards the contact surface in use, so providing a sloped or angled lip which reduces the internal diameter of the cam member 203 in the region of the lip 233. The rim, or lip, 233 extends continuously around the inner circumference of the cam member 203.

The cam member 203 of the illustrated embodiment increases in diameter at a step 234 - both the inner and outer diameters increase in the example shown. The increase in diameter occurs at a position of around two thirds of the length of the cam member 203 from the first end of the cam member in the embodiment shown, and between the inner rim 233 and the second end region - position may vary in other embodiments, or the diameter may not change. In the illustrated embodiment, the outer surface of the cam member 203 is sloped at the step 234, whereas the inner surface has two 90° corners with a small surface portion perpendicular to the longitudinal direction between the corners. Shape may differ in other embodiments.

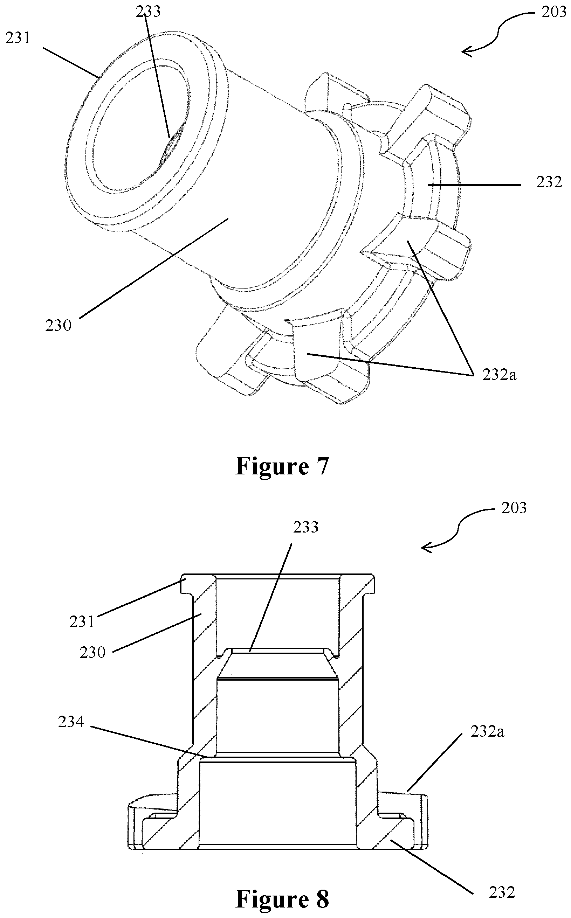

The second end region of the cam member 203 comprises a cog-shaped portion 232 - a toothed rim with a wider diameter than the tubular portion 231. The teeth 232a extend further than the rim in the radial direction, and extend in the longitudinal direction along the cam length. Whilst the cam member 203 has a flat second end surface, as shown most clearly in Figure 8 - the lower surface in that orientation - the teeth 232a are thicker than the rim and extend above the rim in the orientation shown. The upper surfaces (in the orientation shown) of the teeth 232a are sloped. The sloped surfaces are circumferentially aligned - each tooth 232a slopes downwards in the anticlockwise direction in the embodiment shown. The surfaces of the teeth 232a are therefore inclined with respect to the longitudinal direction. In alternative embodiments, each tooth 232a may slope upwards in the anticlockwise direction. The sloped surfaces are helically inclined in the embodiment shown, and more specifically a helical pitch of the sloped surfaces is between 10 mm and 15 mm, and more specifically around 12 mm, in the embodiment shown.

Each tooth 232a therefore provides one of the inclined surfaces of the cam member 203 in the illustrated embodiment. Each inclined surface has an extent in the longitudinal direction of less than 50% of the tooth width in a circumferential direction in the embodiment shown. The proportion may vary in other embodiments.

The toothed rim 232 may also be described as a lip, and may serve to prevent the entirety of the cam member 203 from moving within the button 202, for example by having a diameter larger than the inner diameter of the button 202.

In the embodiment shown, the cam member 203 has six evenly-spaced teeth 232a around its circumference. Different numbers of teeth may be provided in different embodiments.

The cam member 203 is rotationally symmetric. In the embodiment shown, the cam member 203 has rotational symmetry of order 6. In other embodiments, for example in embodiments with different numbers of teeth, the order of rotational symmetry may be different. Changing the order of rotational symmetry may change the rotation angle required to move between positions (e.g. on and off positions for an actuated valve).

The push-button actuator 200 further comprises a button housing 204. The button housing is arranged to be fixedly located on the shower controller 300, holding the other push-button actuator components in place.

The button housing 204 is coaxial with the button 202 and the cam member 203, and surrounds at least a portion of the length of both the button 202 and the cam member 203 in the longitudinal direction.

The inner surface of the button housing 204 of the embodiment being described comprises a plurality of longitudinal indentations or channels 241, which may also be referred to as slots. The channels 241 extend the full length of the button housing 204 in the longitudinal direction. In the illustrated embodiment, there are a total of six channels 241, three 241a with a radial depth perpendicular to the longitudinal direction which is constant for the full length of the channel, and three 241b with a radial depth perpendicular to the longitudinal direction which decreases at a step 243. The step 243 is located near an end of the button housing 204 arranged to be closest to the contact surface 202a in use. The channels 241 are evenly spaced around the inner circumference of the button housing 204, with the two types of channel alternating around the circumference. In the illustrated embodiment, the stepped channels 241b are wider than the non-stepped channels 241b until the step 243, and narrow to substantially the same width as the non-stepped channels beyond the step (in an end region of the button housing 204 arranged to be closest to the contact surface 202a in use).

In the embodiment being described, the channels 241 of the button housing 204 are each arranged to receive a ridge 404 of the button body 400, so preventing relative rotation of the button 202 and the button housing 204, whilst allowing relative longitudinal movement (the button 202 moving up and down with respect to the button housing 204 in the orientation shown in Figures 2 to 4). The use of six slots 241 and corresponding ridges 404, evenly spaced around the circumference, may help to reduce or prevent wobble (as compared to using fewer), guiding the button 202 with a tight running fit without jamming. The ridges 404 may therefore be referred to as guide ridges or guide ribs.

In the embodiment being described, the stepped channels 241b are arranged to receive the clip-headed ridges 404b. The step 243 in a channel 241b is arranged to catch the ledge 405 on the ridge 404b, so limiting a maximum displacement of the button 202 with respect to the button housing 204 (for example, preventing the button 202 from being pushed out of the button housing 204 by the spring 206). The interaction of the steps 243 and ledges 405 may serve to prevent the button 202 from being removed from the button housing 204, for example by limiting how far the button 202 can be pushed by the spring 206, or preventing it from being tipped out under the force of gravity in certain orientations. A different movement-limiting means may be used in additional or alternative embodiments - for example a rim on a cavity 306 arranged to receive a push-button actuator 200 extending partially across the contact surface 202a.

In alternative embodiments, a different number of channels 241 and ridges 404 may be provided, and/or all channels and ridges may be identical rather than being of two (or more) different types.

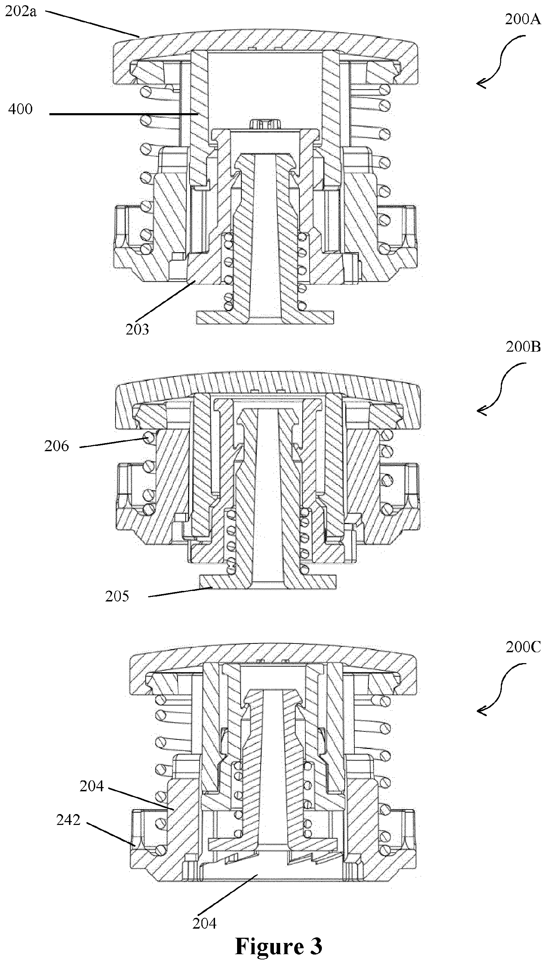

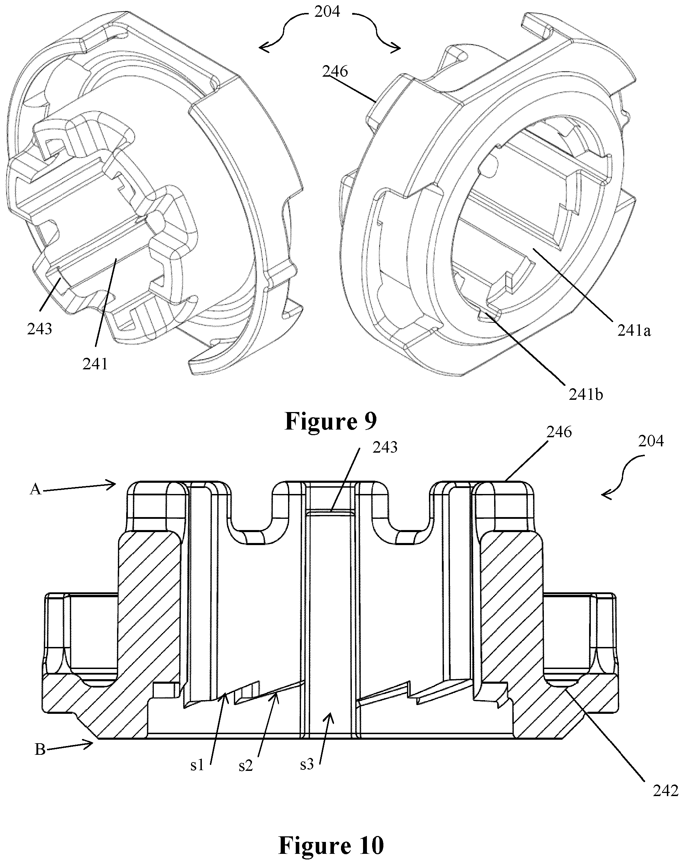

The button housing 204 comprises a first end region (labelled A in Figure 10 - the upper end in the orientation of Figures 3, 4 and 10) and a second end region (labelled B in Figure 10 - the lower end in the orientation of Figures 3, 4 and 10). The first end region is arranged to be closer to the contact surface 202a than the second end region.

The first end region of the button housing 204 has a crenelated appearance. The castellations (crenellations) 246 are arranged to fit into gaps or indentations 407 in the rim 401 of the button body 400. This nesting of the button body 400 and button housing 204 may make the whole push-button actuator assembly 200 shorter / more compact, whilst also providing a suitable length and support for the guide ribs 404.

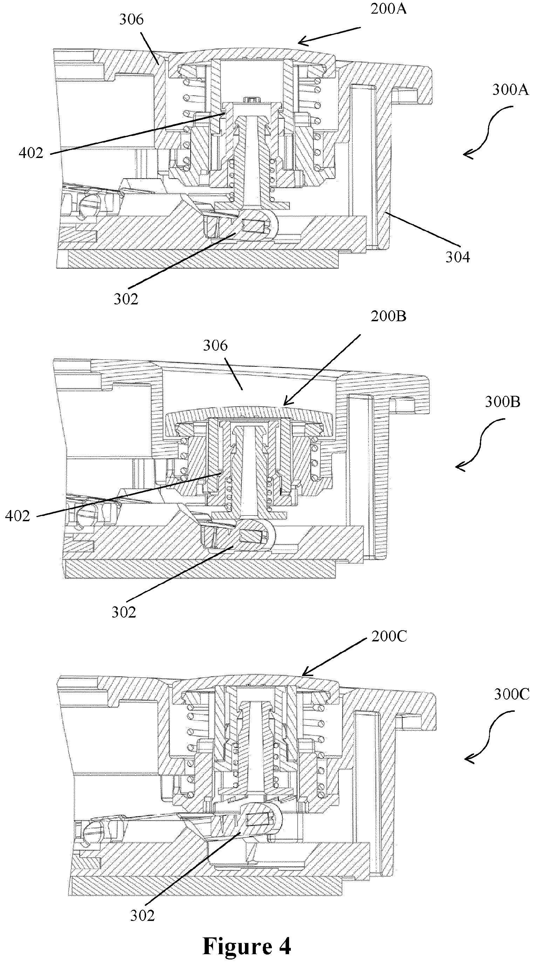

In the embodiment being described, the second end region of the button housing 204 comprises a substantially U-shaped outer rim 242. The rim 242 extends radially outward from the second end region and then longitudinally back towards the first end region, so providing a circumferential channel around the second end region. The circumferential channel is used to locate a biasing means 206, which, in the illustrated embodiment, is a coil spring. Different biasing means may be used in other embodiments, and/or the biasing means may be differently mounted. The spring 206 extends between the circumferential channel of the rim 242 of the button housing 204 and a facing surface of the rim 401 of the button body 400. The spring 206 biases the button body 400 away from the circumferential channel of the button housing 204. As shown in Figures 2, 3 and 4, the spring 206 encircles the body 400 of the button 202, at least the first end region of the button housing 204, and at least a portion of the cam member 203. The spring 206 is coaxial with the other push-button actuator components. An outer surface of the U-shaped outer rim 242 of the button housing 204 may also provide mounting or connection points to a shower controller 300, as shown in Figure 4.

The cam member 203 is arranged to move both longitudinally and rotationally with respect to the button housing 204.

The second end region of the button housing 204 comprises three surface types, s1, s2, and s3, arranged to interact with the teeth of the cam member 232a. This sequence of three surfaces repeats six times around the inner circumference of the button housing 204. In embodiments with a different number of teeth and/or a different order of rotational symmetry of the cam member 203, the sets of surfaces may vary accordingly. Surfaces s1 and s2 are sloped to match the sloped surfaces of the teeth 232a - these surfaces are all inclined with respect to the longitudinal direction, and helical.

In the embodiment shown, the surfaces s1 and s2 are spaced from an end of the button housing 204 furthest from the contact surface 202a by a longitudinal distance; the longitudinal distance is substantially equal to tooth height in the embodiment shown.

Surfaces s3 correspond to the longitudinal channels 241. These channels 241 are sized to be wide enough to fit a tooth 232a of the cam member 203 therewithin, such that the cam member 203 can slide longitudinally with respect to the button housing when the teeth 232a are aligned with the channels 241.

In a first rotational position of the cam member 203 with respect to the button housing 204, all teeth 232a of the cam member 203 are in contact with s1 surfaces of the button housing 204.

In a second rotational position of the cam member 203 with respect to the button housing 204, all teeth 232a of the cam member 203 are in contact with s2 surfaces of the button housing 204.

As these surfaces are sloped in the same direction, there is a step change in longitudinal position (increase in longitudinal distance from the contact surface 202a) between an end of surface s1 and a start of surface s2. The cam member 203 therefore has to be moved longitudinally further from the contact surface 202a to move between the first and second rotational positions, to overcome that step.

In a third rotational position of the cam member 203 with respect to the button housing 204, all teeth 232a of the cam member 203 are aligned with the s3 channels of the button housing 204. As surface s2 slopes towards the channel 241, no longitudinal movement further from the contact surface 202a is needed to move between the second and third rotational positions - further rotation will automatically result in the teeth 232a becoming aligned with and entering the channels 241.

Once the teeth 232a are aligned with the channels 241, the biasing force of the spring 207 pushes the cam member 203 upwards (in the orientation shown) as the spring 207 is compressed by the over-travel member 205 contacting the arm 302, with the teeth 232a sliding upwards within the channels 241.

The final part of Figure 3 - 200C - shows the cam member 203 in its closest possible position to the contact surface 202a in this configuration. The cam 203 may sit lower in this configuration in reality - its position is determined by the spring-loaded arm 302 of the valve pushing it up. In isolation, when not installed to the valve there is nothing biasing the cam member 203 either way in the embodiment shown. In the embodiment shown, extra clearance is provided to ensure that the valve always turns off even with manufacturing / installation tolerance and variance.

In the illustrated embodiment, surfaces s1 and s2 are inclined. The inclination of surface s1 allows the teeth 232a to be accommodated snugly, with minimal wobble. The inclination of surface s2 causes the cam member 232 to rotate the teeth 232a towards the channels 241, due to the interaction of the respective inclined surfaces under the biasing force. The inclined surfaces s2 therefore interact with the inclined surfaces of the cam member 203 so as to cause the cam member 203 to rotate as it moves in the longitudinal direction. The inclined surfaces s1, s2 may therefore provide smoother push-button actuator 200 locking and movement than non-inclined surfaces.

The button housing 204, and more specifically the step between surfaces s1 and s2 in the illustrated embodiment, is arranged to hold the cam member 203 in a first position in which the over-travel member pushes the arm 302. The cam member 203 must be moved longitudinally to escape from the first position. Pushing the arm 302 opens a valve in the illustrated embodiment (while releasing the arm closes the valve), but may close a valve in alternative embodiments.

Additionally, the button housing 204, and more specifically the edges of the channel s3/241 in the illustrated embodiment, is arranged to hold the cam member 203 in a second position in which the over-travel member 205 does not push, and optionally is out of contact with, the arm 302. The cam member 203 must be moved longitudinally to escape from the second position. Removing the force from the arm 302 closes a valve in the illustrated embodiment, but may open a valve in alternative embodiments.

The button housing 204 is therefore arranged to hold the cam member 203 in either a position in which the valve is open or a position in which the valve is closed, depending on the angle of rotation of the cam member 203 with respect to the button housing 204.

In the illustrated embodiment, the button 202, button housing 204, and cam member 203 all comprise inclined surfaces. The inclined surfaces 232a, 403, s1, s2, all have the same incline (in this case, the same helical pitch). A steeper incline might necessitate more over-travel / clearance on the latch (in the longitudinal direction), to allow the teeth 232a to be moved by the same angular rotation. It may be desirable to minimise the over-travel for both user comfort and to provide a slim design (relatively small button length in the longitudinal direction). A shallower incline may allow the over-travel to be further reduced for the same angular rotation, but may also increase the chance of accidental actuation, or wear of parts in use preventing the button housing 204 from properly locking the cam member 203 in place. The incline (e.g. helical pitch) may therefore be selected as a trade-off between these competing factors, and may therefore vary widely between embodiments. Tooth 232a size and pitch may therefore be adjusted as appropriate for a compact design. For example, the inclined surface of each tooth 232a of the embodiment being described has an extent in the longitudinal direction of less than the tooth width in a circumferential direction, and in particular less than 75%, 60%, 50%, 40% or 30% of the tooth width in a circumferential direction.

The push-button actuator 200 further comprises an over-travel member 205. The over-travel member 205 is mounted on, and more specifically within, the cam member 203. The over-travel member 205 is at least substantially cylindrical, and more specifically at least substantially tubular, in the embodiment being described. The over-travel member 205 extends beyond the cam member 203 in the longitudinal direction away from the button contact surface 202a.

In the arrangement shown in Figure 4, the over-travel member 205 is arranged to push a valve connection member 302 in response to the applied force so as to mechanically actuate a valve (not shown). The valve connection member 302 is a pivoted arm 302 in the example shown, so allowing the push-button actuator 200 to actuate a valve not aligned with the button 202.

The over-travel member 205 is coaxial with the button 202, cam member 203 and button housing 204 in the illustrated embodiment.

The over-travel member 205 has a lip or rim 251 extending radially outward in the end region arranged to be closest to the contact surface 202a in use. The rim 251 is arranged to lie between the inner rim 233 of the cam member 203 and the contact surface 202a in use - the inner rim 233 is arranged to contact the over-travel member rim 251 once the over-travel member 205 moves far enough in the longitudinal direction, and so prevent further relative movement of the over-travel member 205 in the direction away from the contact surface 202a.

The over-travel member 205 is hollow and at least substantially tubular in the embodiment shown - in other embodiments, it may not be hollow and/or may be differently shaped.

The over-travel member 205 of the illustrated embodiment has a second, wider, rim 252 in the end region arranged to be furthest from the button contact surface 202a in use. The rim 252 provides a surface area for transferring the force to a valve connection member 302. Providing a wide rim may allow for increased flexibility/error tolerance in relative position of the push-button actuator 200 and the valve connection member 302 in a plane perpendicular to the longitudinal direction.

A biasing member 207 (referred to as the first biasing member 207), and more specifically a coil spring in the illustrated embodiment, is mounted between the rim 252 of the over-travel member 205 and the step 234 in internal diameter of the cam member 203. The spring 207 is arranged to be around an outer surface of the over-travel member, and at least partially within the cam member 203. The size of the over-travel member 205 relative to the cam member 203 is selected such that the spring 207 fits within the space between the two in the wider region of the cam member 203, but so that the spring 203 cannot slide into the narrower region of the cam member 203. In alternative embodiments, additional or alternative biasing members may be used - for example, a set of leaf springs or small-diameter coil springs arranged around the circumference may be used instead of a single spring encircling the circumference. A compressed rubber material or the like may be used in place of a spring in some embodiments not being part of the claimed invention.

In the illustrated embodiment, the two springs 206, 207 are coaxial, and both aligned with the longitudinal direction. The spring 207 between the over-travel member 205 and the cam member 203 has a narrower diameter than the spring 206 between the button 202 and the button housing 204, and lies radially inward of the wider spring 206. The springs 206, 207 overlap to varying extents in different positions of the button, as described in more detail below.

The spring 207 is arranged to bias the over-travel member 205 in the longitudinal direction away from the button contact surface 202a, i.e. biasing it to extend further out of the cam member 203. The interacting rims 233, 251 prevent the over-travel member 205 from coming completely out of the cam member 203. Use of the biased over-travel member 205 may allow for increased flexibility/error tolerance in relative position of the push-button actuator 200 and the valve connection member 302 in the longitudinal direction.

Figure 3 shows the push-button actuator 200 in three positions - A, B and C. Figure 4 shows the same push-button actuator 200 in the same three positions, in the context of the shower controller 300. Positions A and C are, respectively or otherwise, the first and second positions in which the valve is held open or held closed.

Position A is a latched position. In position A, the cam member 203 is held in position by the button housing 204, and more specifically by the sloped upper (in the orientation shown) surfaces of the teeth 232a of the cam member 203 contacting the sloped lower (in the orientation shown) s1 surfaces of the button housing 204.

In the latched position A, the over-travel member 205 is in contact with the arm 302, pushing the arm 302 downwards. The biasing force between the over-travel member 205 and the cam member 203 (due to the spring 207) pushes the cam member 203 in the longitudinal direction against the s1 surfaces of the button housing 204. The extent of compression of the spring 207 in this positon will depend on the position of the arm 302 relative to the over-travel member 205. The compressive strength of the spring (or other biasing member(s) in other embodiments) may be selected as appropriate to ensure that the over-travel member 205 can actuate the valve.

In the latched position A, the button 202 is in an undepressed location, pushed upwards (in the orientation shown) by the spring 206. Overlap of the button 202 and the cam member 203 is reduced in position A as compared to positions B and C (described below). In position A, the majority of the cam member 203 extends out of the button 202 and towards the valve connection member. The corresponding rims 231, 402 of the button 202 and cam member 203 are not quite touching, but close, in the illustrated embodiment. In other embodiments, these rims 231, 402 may touch in the latched position.

In the latched position A of the embodiment shown, the end of the cam member 203 furthest from the contact surface 202a is approximately level with the end of the button housing 204 furthest from the contact surface 202a. The button 202 is mainly above (in the orientation shown) the button housing 204, with only a lower portion of the body 400 within the button housing 204. The spacing between the end of the cam member 203 furthest from the contact surface 202a and the contact surface 202a is greatest in position A.

In position A, an upper part of the narrower spring 207 overlaps longitudinally with, and lies within, a lower part of the wider spring 206.

In the embodiment shown, pushing the arm 302 downwards (in the orientation shown - i.e. away from the contact surface 202a) opens the valve / turns a flow of water on, so position A is the "on" position for the shower 100. In other embodiments, releasing the arm 302 to allow it to move upwards (in the orientation shown) may open the valve, so making position A the "off' position of the shower 100.

To move between position A and position B, a force F in the longitudinal direction (downwards, in the embodiment shown) is applied to the contact surface 202a. The applied force moves the button 202 downwards (in the orientation shown), until a lower surface of the button rim 401 contacts an upper surface of the button housing 204. The button 202 is therefore mainly within the button housing 204 in position B. The longitudinal movement of the button 202 brings the body 400 of the button 202 into contact with the cam member 203, pushing the cam member 203 downwards.

Position B is the over-travel position of the push-button actuator 200. The cam member 203 is at its furthest downward (in the orientation shown) position in position B. The spring 207 may be compressed further than in position A as the over-travel member 205 is pushed upwards by the arm 302 (which is already in its downward positon so cannot move further and instead compresses the spring 207).

The over-travel displacement, further in the longitudinal direction, serves to move the teeth 232a of the cam member 203 beyond the step between surfaces s1 and s2. Interactions between the sloped surfaces 403 of the button 202 and the teeth 232a cause the cam member 203 to rotate as it is pushed by the button 202, moving the teeth 232a to be aligned with surface s2 (or, in some embodiments, s3).

In position B, the cam member 203 is in its furthest downward (in the embodiment shown) position, and the overlap between the two springs 206, 207 is at a minimum (there may be no overlap between the two springs 206, 207 in this position in some embodiments).

The force F is then released, and the push-button actuator moves to position C. As the force is released, the button 202 returns to its initial position under the biasing of the spring 206.

The biasing of the spring 207 pushes the cam member 203 upwards - if the teeth 232a are already aligned with the channels 241, s3, the cam member 203 can slide upwards within the button housing 204. If the teeth 232a are aligned with sloped surfaces s2, the biasing causes the cam member to rotate further, sliding into the channels 241 so that the cam member 203 can slide upwards (in the orientation shown - i.e. towards the contact surface 202a). The cam member 203 and over-travel member 205 therefore move closer to the contact surface 202a than in position A, reducing or removing the force on the arm 302, and thereby actuating the valve.

In position C, the overlap between the narrower spring 207 and the wider spring 206 is larger than that in positions A or B. In the illustrated embodiment, the narrower spring 207 lies entirely within the wider spring 206 in position C.

In the embodiment shown, reducing or releasing the force on the arm 302 such that it can move upwards (in the orientation shown - i.e. towards the contact surface 202a) closes the valve / turns a flow of water off, so position C is the "off' position for the shower 100. In other embodiments, depressing the arm 302 may close the valve, so making position C the "on" position of the shower 100.

In positions B and C, the majority of the cam member 203 lies within the button 202. In position A, a smaller proportion of the over-travel member 205 extends out of the cam member 203 towards the valve connection member than in position C, in which the valve connection member is not arranged to be pushed by the over-travel member.

A second application of the same force, F, pushes the cam member 203 downwards again, beyond the end of the channel 241, and causes it to rotate further in the same direction (e.g. clockwise) such that the teeth 232a once more align with surface s1 and are locked in position A when the force is released. The push-button actuator 200 can therefore be cycled through positons A, B, and C.

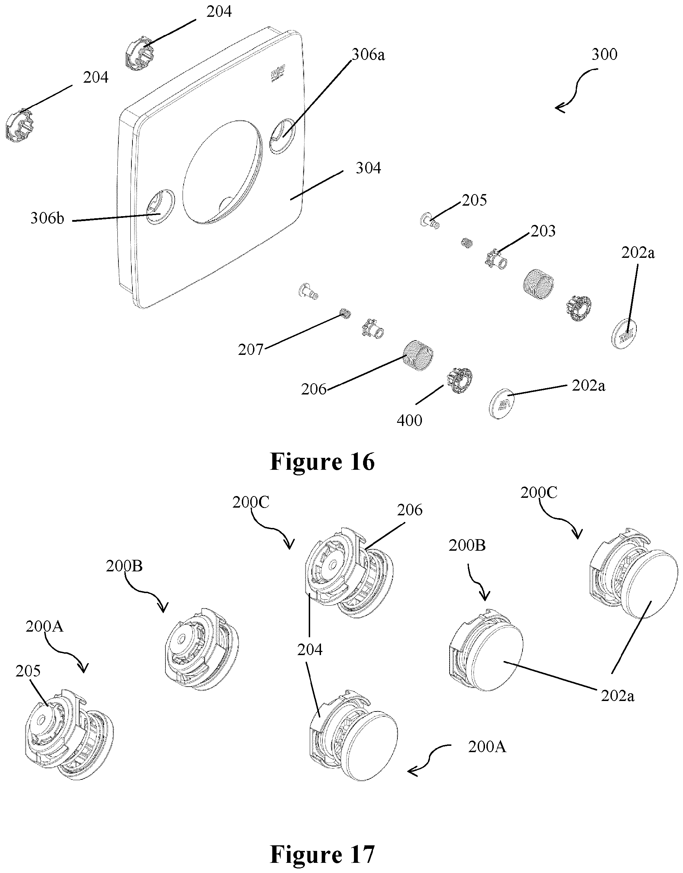

Figure 16 illustrates a controller 300 with two push-button actuators 200 each arranged to be received in a corresponding recess 306a, 306b. The contact surfaces 202a are labelled according to their function in the embodiment shown.

The push-button actuator 200 described above is a specific example of a push-button actuator comprising a button 202 comprising a contact surface 202a, and arranged to be moved in a longitudinal direction by a force (F) applied to the contact surface 202a; a button housing 204 at least partially surrounding the button 202, wherein the button 202 is arranged to move longitudinally with respect to the button housing 204; and an actuator member 203 mounted on one or both of the button 202 and the button housing 204. The cam member 203 is the actuator member 203. In this embodiment, all three of the button 202, the button housing 204, and the cam member 203 comprise a plurality of surfaces inclined with respect to the longitudinal direction. These surfaces are arranged to interact so as to cause the actuator member 203 to rotate (around an axis in the longitudinal direction) when the button 202 is pressed. The over-travel member 205 is indirectly mounted on the button 202 in this embodiment - being mounted on the actuator member 203 which is in turn mounted on the button 202.

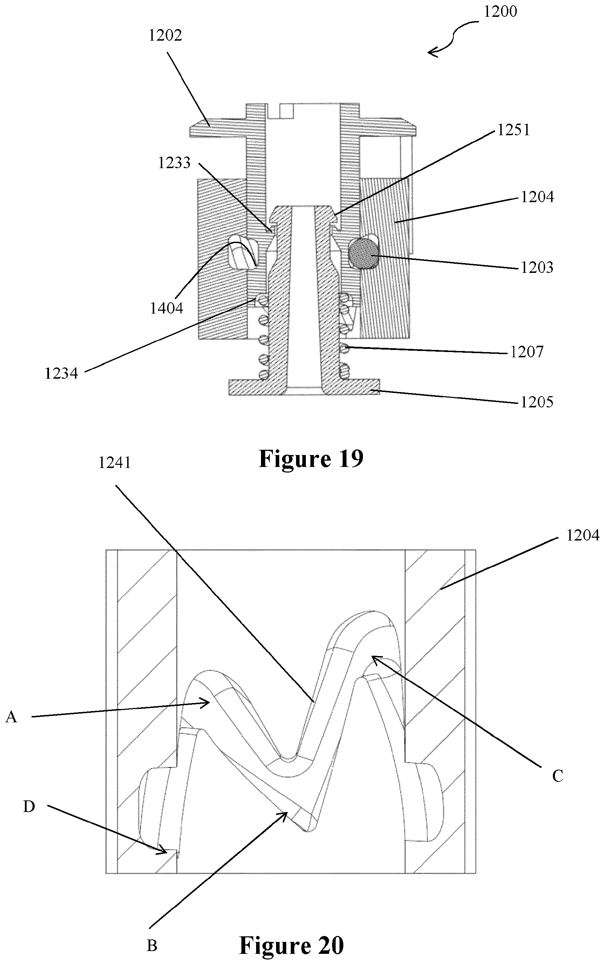

Figures 19 to 23 illustrate a different and not claimed example of a push-button actuator 1200 - different but corresponding reference numerals are used for the different but corresponding components - e.g. 1200 for the push-button actuator 200, 1200 and 1202 for the button 202, 1202 - for ease of comparison.

Figure 19 shows a cross-sectional side view of a push button actuator 1200, with components generally corresponding to those of the push-button actuator 200 described above. The following description emphasises the differences; the similarities will be apparent to the skilled person in light of the above description. An equivalent of the second biasing means, which is arranged to bias the button 1202 with respect to the button housing 1204 - e.g. coil spring 206 - is not shown in these figures for ease of representation, but is present and may be located in an equivalent position to that shown for the embodiment 200 described above.

The button 1202 has a button body 1400 extending away from the contact surface 1202a in the longitudinal direction; the button body 1400 is substantially cylindrical and hollow in the embodiment shown. The button body 1400 is arranged to receive at least a portion of the over-travel member 1205 therewithin. The button body 1400 comprises a step or ledge 1234 arranged to engagingly receive an upper end region of the biasing member 1207 (this first biasing member 1207 is a coil spring 1207 in the embodiment shown, but additional or alternative biasing members may be provided in other embodiments).

The button body 1400 also comprises an inner rim 1233. The inner rim 1233 is sloped, and extends radially inward and in the longitudinal direction arranged to be towards the contact surface in use, so providing a sloped or angled lip which reduces the internal diameter of the button body 1400 in the region of the lip 1233. The rim, or lip, 1233 extends continuously around the inner circumference of the button body 1400 and is arranged to provide a stop for the over-travel member 1205. The over-travel member has a corresponding, outwardly-directed, rim 1251 arranged to catch on the rim 1233, so limiting a maximum movement of the over-travel member 1205 out of the button body 1400. The over-travel member 1205 is directly mounted on the button body 1400 in this embodiment, instead of being mounted on the button 1202 via a cam member as was the case for the embodiments described with respect to the earlier figures.

The button body 1400 of this embodiment 1200 is more simply shaped than that 400 of the embodiment 200 described above - the outer surface of the button body 1400 has a single, circular, circumferential channel (or indentation) 1404 extending around it (as opposed to the multiple longitudinal ridges 404 of the embodiment 200 described above). The circumferential channel 1404 is perpendicular to the longitudinal direction.

A cover may be added to provide a smooth contact surface 1202a and reduce or prevent water ingress - reference 1202a in these figures is used to indicate the portion of the button 1202 to which a force applied onto such a cover would be directly transferred.

The button housing 1204 also comprises a circumferential channel 1241. The circumferential channel 1241 of the button housing 1204 is provided as an indentation in the inner surface of the button housing 1204, such that the two channels 1404, 1241 face each other. Unlike the circumferential channel 1404 of the button 1202, the circumferential channel 1241 of the button housing 1204 has a zig-zag shape, with differently-angled portions extending at around the circumference at an angle to the longitudinal direction, as shown in Figure 20. The angled portions are all sloped with respect to the longitudinal direction. Four different types of corner A, B, C, D are provided between the angled sections. In the orientation shown in Figures 19 and 20, corners A and C are peaks in the channel 1241 (i.e. higher up / closer to the contact surface 1202a), whereas corners B and D are troughs in the channel 1241 (i.e. lower down/further from the contact surface 1202a). A-type corners are higher than B-type corners but lower than C-type corners. The corners are provided in sequence - A, B, C, D, A, B, C, D - around the circumference of the actuator 1200. In the embodiment shown, D-type corners are lower than B-type corners. In other embodiments, corners B and D may be at the same longitudinal position, and may both be referred to as B-type corners.

In other embodiments, only a single set (A, B, C, D), or more than two repeats of the set, may be provided. In embodiments in which corners B and D are of the same height, the sequence may be represented as A, B, C, B, ....

In alternative embodiments, the circumferential channel 1404 of the button body 1400 may have a zig-zag shape, in addition to, or instead of, the channel 1241 of the button housing 1204 having a zig-zag shape.

The push-button actuator 1200 further comprises a ball 1203. The ball 1203 is the actuator member 1203, 203, fulfilling the role played by the cam member 203 in the embodiment 200 described above.

The ball 1203 is partially received within the channel 1404 of the button 1202 and partially received within the channel 1241 of the button housing 1204. The button 1202 and button housing 1204 are arranged to be sufficiently close in a radial direction / the ball 1203 is sized such that the ball 1203 is trapped within an overlapping portion of the channels 1404, 1241, and cannot slide between the button housing 1204 and the button body 1400 outside of the channels. For example, each channel 1404, 1241 may have a depth of approximately the radius of the ball 1203, and the gap between the button housing 1204 and the button body 1400 may be minimal, and much smaller than the ball radius.

As the button 1400 and button housing 1202 move relative to each other, the region in which the channels 1404, 1241 overlap changes - the ball 1203 therefore rolls around the circumference, within the changing overlapping region.

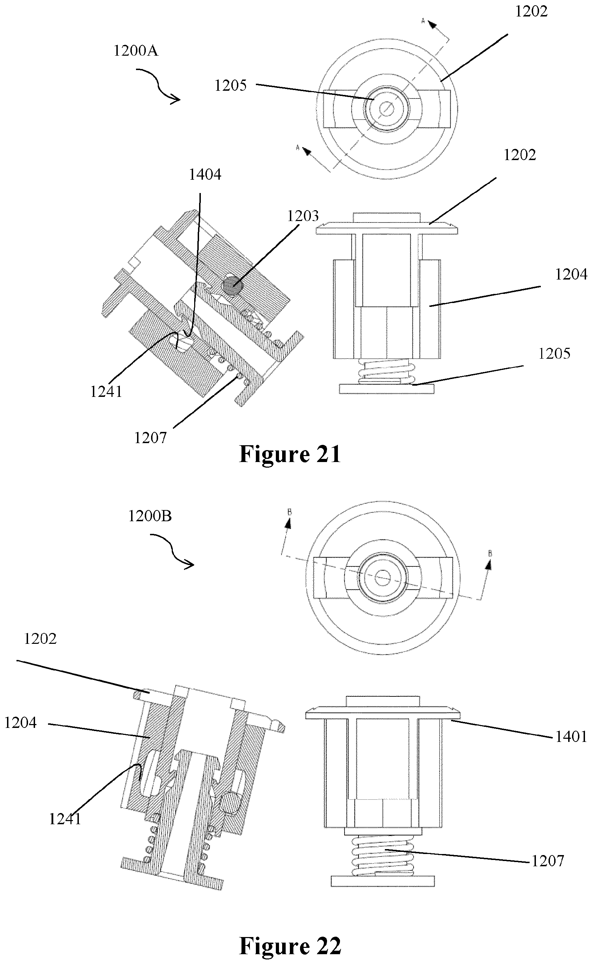

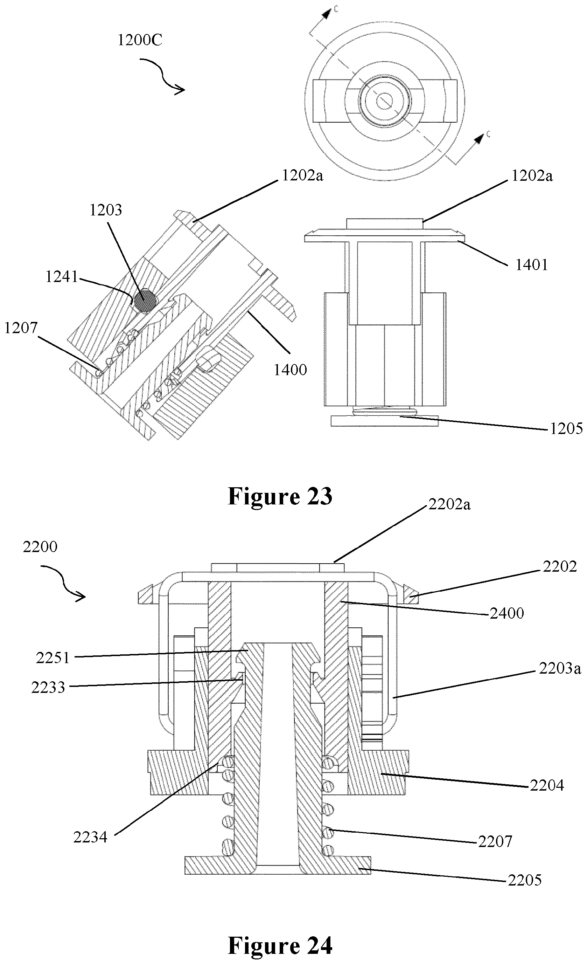

The movement is described in more detail with respect to Figures 21 to 23 - Figure 21 shows the position 1200A of the push-button actuator 1200 when the ball 1203 is in position A (at an A-type corner), Figure 22 shows the same 1200B for position B (ball at a B-type corner), and Figure 23 shows the same 1200C for position C (ball at a C-type corner).

Position A is a latched position. In position A, the ball 1203 is held in position by the button housing 1204 - the ball is being pushed upwards against the corner A of the channel 1241. The circumferential channel 1404 in the button body 1400 is longitudinally level with corners A of the channel 1241 on the button housing 1204.

In the latched position A, the over-travel member 1205 is in contact with the arm (not shown), pushing the arm downwards. The biasing force between the over-travel member 1205 and the button 1202 (due to the spring 207) pushes the button 1202 in the longitudinal direction away from the arm, so pushing the ball 1203 against the upper surface of the A-type corner of the button housing 1204 in which the ball 1203 is located. The extent of compression of the spring 1207 in this positon will depend on the position of the arm relative to the over-travel member 1205. The compressive strength of the spring 1207 (or other biasing member(s) in other embodiments) may be selected as appropriate to ensure that the over-travel member 1205 can actuate the valve.

In the latched position A, the button 1202 is in an undepressed location, pushed upwards (in the orientation shown) by the second biasing member (not shown). In position A, the majority of the over-travel member 1205 extends out of the button 1202 and towards the valve connection member. The corresponding rims 1231, 1402 of the button 202 and over-travel member 1205 are not quite touching, but close, in the illustrated embodiment. In other embodiments, these rims 1231, 1402 may touch in the latched position.

In the embodiment shown, pushing the arm downwards (in the orientation shown - i.e. away from the contact surface 1202a) opens the valve / turns a flow of water on, so position A is the "on" position for the shower 100. In other embodiments, releasing the arm to allow it to move upwards (in the orientation shown) may open the valve, so making position A the "off' position of the shower 100.

To move between position A and position B, a force F in the longitudinal direction (downwards, in the embodiment shown) is applied to the contact surface 1202a. The applied force moves the button 1202 downwards (in the orientation shown), until a lower surface of the button rim 1401 contacts an upper surface of the button housing 1204. The button 1202 is therefore mainly within the button housing 1204 in position B. The longitudinal movement of the button 1202 brings the over-travel member 1205 further within the body 1400 of the button 1202, due to the spring 1207 being compressed by the unmoving (un-shown) arm.

As the button 1202 moves longitudinally, the overlap position of the two channels 1404, 1241 moves downwards, in the orientation shown, and towards position B circumferentially. The ball 1203 is therefore pushed along the channels 1404, 1241, between the two positions, and is moved into the trough B.

Position B is the over-travel position of the push-button actuator 1200. The ball 1203 is at its furthest downward (in the orientation shown) position in position B. The over-travel member 1205 is also at its furthest downward (in the orientation shown) position in position B. The spring 207 may be compressed further than in position A as the over-travel member 205 is pushed upwards by the arm (which is already in its downward positon so cannot move further and instead compresses the spring 1207).

The force, F, is then released, and the push-button actuator 1200 moves to position C. As the force is released, the button 202 returns upwards (in the orientation shown) under the biasing of the spring 207, and the un-shown second biasing member.

Once the downward force is released, the ball 1203 is free to slide upwards along the channels 1404, 1241 between position B and position C. As the button 1202 moves upwards with respect to the housing 1204, the overlapping portion of the channels 1404, 1241 rises, so allowing the ball 1203 to move around the circumference. Corner C provides an upper limit to movement of the ball 1203, so preventing the button body 1400 from moving further out of the housing 1204.

The over-travel member 1205 therefore moves closer to the contact surface 1202a than in position A, reducing or removing the force on the arm, and thereby actuating the valve.

In the embodiment shown, reducing or releasing the force on the arm such that it can move upwards (in the orientation shown - i.e. towards the contact surface 1202a) closes the valve / turns a flow of water off, so position C is the "off' position for the shower 100. In other embodiments, depressing the arm may close the valve, so making position C the "on" position of the shower 100.

A second application of the same force, F, pushes the button 1202, and therefore the ball 1203, downwards again, and causes the ball 1203 to roll further along the channel in the same circumferential direction (e.g. clockwise) such that the ball moves to another trough D, and is then pushed upwards into locked in position A when the force is released, under the biasing of the biasing members. The push-button actuator 1200 can therefore be cycled through positons A, B, C and D.

Figures 24 to 29 illustrate a further different non-claimed example of a push-button actuator 2200 - different but corresponding reference numerals are used for the different but corresponding components - e.g. 2200 for the push-button actuator 200, 1200, 2200 and 2202 for the button 202, 1202, 2202 - for ease of comparison.

Figure 24 shows a cross-sectional side view of a push button actuator 2200, with components generally corresponding to those of the push-button actuator 200 described above. The following description emphasises the differences; the similarities will be apparent to the skilled person in light of the above description. An equivalent of the second biasing means, which is arranged to bias the button 2202 with respect to the button housing 2204 - e.g. coil spring 206 - is not shown in these figures for ease of representation, but is present and may be located in an equivalent position to that shown for the embodiment 200 described above. In some embodiments, the diameter of one or both of the button 2202 and the button housing 2204 may be increased as compared to that shown in Figure 24 so as to more easily accommodate a spring encircling the button body 2400 and actuator member 2203 (a torsion wire in this embodiment, as described in more detail below). In alternative or additional embodiments, one or more springs of a relatively small diameter may be used - for example two springs, each placed along one side of the button body 2400 spaced from the actuator member 2203.

The button 2202 has a button body 2400 extending away from the contact surface 2202a in the longitudinal direction (a cover for the contact surface 2202a, arranged to provide a smooth contact surface for a user, is present in use in this embodiment, but not shown for simplicity); the button body 2400 is substantially cylindrical and hollow in the embodiment shown. The button body 2400 is arranged to receive at least a portion of the over-travel member 2205 therewithin. The button body 2400 comprises a step or ledge 2234 arranged to engagingly receive an upper end region of the biasing member 2207. The step or ledge 2234 is an internal step within the hollow interior of the button body 2400, and towards a lower end of the button body 2400 in the orientation shown, in the embodiment being described. The first biasing member 2207 is a coil spring 2207 in the embodiment shown, but additional or alternative biasing members may be provided in other embodiments.

The button body 2400 also comprises an inner rim 2233. The inner rim 2233 is located above the step or ledge 2234 in the embodiment shown. The inner rim 2233 is sloped, and extends radially inward and in the longitudinal direction arranged to be towards the contact surface in use, so providing a sloped or angled lip which reduces the internal diameter of the button body 2400 in the region of the lip 2233. The rim, or lip, 2233 extends continuously around the inner circumference of the button body 2400 and is arranged to provide a stop for the over-travel member 2205. The over-travel member has a corresponding, outwardly-directed, rim 2251 arranged to catch on the rim 2233, so limiting a maximum movement of the over-travel member out of the button body 2400.

The button body 2400 of this embodiment 2200 is more simply shaped than that 400 of the first embodiment 200 described above - the outer surface of the button body 2400 is smooth and cylindrical.

The button 2202 comprises an actuator member 2203 mounted thereon, and more particularly comprises a pair of actuator members 2203a, 2203b in the embodiment being described. Only a single actuator member 2203 may be provided in other embodiments.

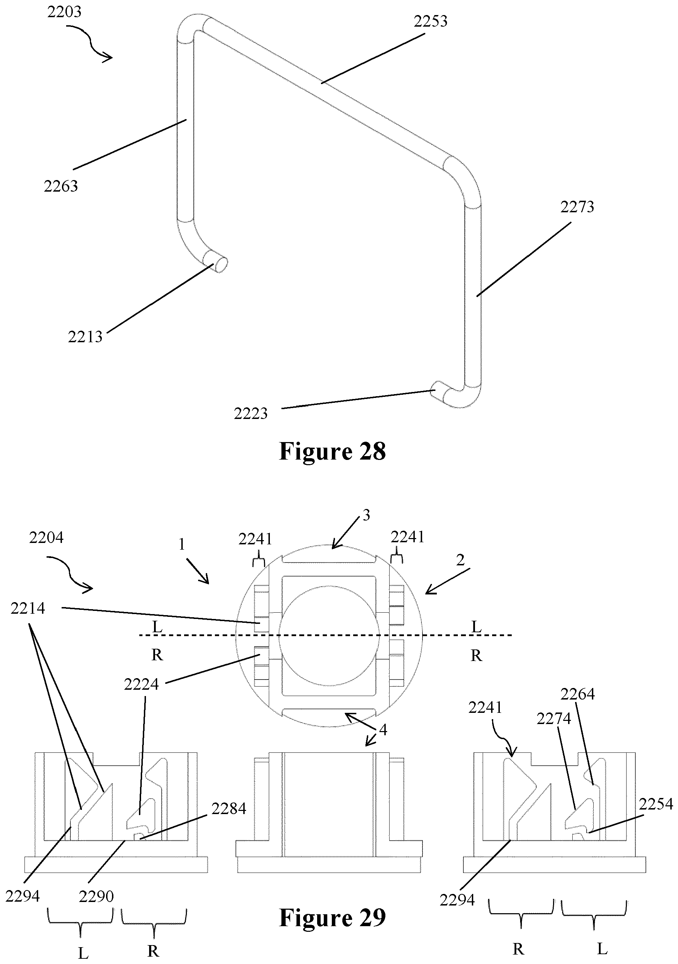

The or each actuator member 2203 of the embodiment being described is a torsion wire 2203 as shown in more detail in Figure 28.

In the embodiment being described, the torsion wires 2203 are mounted onto the button 2202 by a central region 2253 of each torsion wire 2203 which is held parallel to the button surface. In the embodiment shown, the central region 2253 of each torsion wire 2203 lies on top of the button body 400 and beneath the button cover/contact surface 2202a (in the orientation shown). The button cover 2202a may act as a cap holding the wires 2203 in place in some embodiments. In other embodiments, one or more clips may be used to hold the wires 2203. The central regions 2253 of each torsion wire 2203 are parallel to, and spaced from, each other, and are secured to the button 2202 such that they cannot move vertically (in the orientation shown) with respect to the button 2202, but can rotate around their own axes. The central regions 2253 of each torsion wire 2203 therefore move with the button 2202 when it is pressed and released. Outer regions of each wire 2203 extend from the central region at an angle, and extend through a slot in the button 2202 in the embodiment shown. The wires 2203 are free to rotate as far as the slot allows, but guided by the interaction of the ends of the wires 2213a, b, 2223a,b with protrusions on the button body 400, as described in more detail below.

Each torsion wire 2203 is circular in cross-section in the embodiment shown, but may have a different cross-section in other embodiments. Each torsion wire 2203 is bent into a substantially rectangular shape, with one side of the rectangle having a gap between two end regions 2213, 2223 of the wire 2203 which are directed towards each other (the gap being shorter than the side of the rectangle on which it is located). The side 2253 of the rectangle opposite the gap is arranged to be rotatably mounted on the button 2202, parallel to the contact surface 2202a, so providing two "actuator arms" 2263, 2273 arranged to extend away from the contact surface 2202a in the longitudinal direction, and to be pivotable (by rotation of the rotatably mounted section of wire 2253). The end regions 2213, 2223 of the torsion wire 2203 can therefore move circumferentially, as well as longitudinally as the button moves, as the torsion wire 2203 rotates around the pivot 2253.

The wires 2203 are described as torsion wires 2203 because they are able to twist or flex but are biased back towards their original shape by internal forces - in particular, the two arms 2263, 2273 are arranged to be able to reversibly rotate in opposite directions to an extent limited by the torsional properties of the wire. The unstressed "rest" position is that shown in Figure 28 - the wire 2203 is therefore internally biased to return to this rest position, with the two arms 2263, 2273 parallel to each other, in the absence of an applied force urging the arms 2263, 2273 in different directions.

A cover may be added to provide a smooth contact surface 1202a, for example covering the mountings 2253a, b of the actuator members 2203a,b in the embodiment shown, and may also reduce or prevent water ingress - reference 2202a in these figures is used to indicate the portion of the button 2202 adjacent the cover and to which a force applied onto the cover is directly transferred as the cover is not shown.

The button housing 2204 of the embodiment being described comprises a substantially cylindrical portion arranged to surround the button body 2400, 400, and to lie between the actuator arms 2263, 2273. The button housing 2204, as shown in Figure 29, has an outer circumferential surface which is divided into four planar surfaces with 90° corners inbetween.

The button housing 2204 comprises formations 2241 on its outer surface, the formations 2241 providing a plurality of inclined surfaces arranged to interact with the end regions 2213, 2223 of the or each torsion wire 2203 as the button 2202 moves longitudinally relative to the button housing 2204. The torsion wires 2203 each have two ends 2213a, 2213b, 2223a, 2223b - at least one end of each torsion wire 2203 is in contact with a formation 2241, and guided by that formation/has its movement restricted by that formation, in every position of button operation in the embodiment shown. Both ends may be in contact with a respective formation at some stages of operation. The ends of the wires 2203 are thereby retained within the tracks/grooves between the protrusions 2241.

In the embodiment being described, the formations 2241 are provided on each of an opposed pair (1, 2,) of the four planar surfaces, as described in more detail below. The other two surfaces (3, 4) of the button housing 2204 have no formations arranged to interact with the torsion wire 2203, and may be curved instead of planar in some embodiments. One or more of these surfaces (3, 4) may be arranged to have a spring extending along or adjacent to it, in a vertical direction for the orientation shown - the spring may bias the button 2202 and the button housing 2204 away from each other, so forming, or being part of the second biasing means.

In alternative embodiments, the actuator member(s) 2203 may be mounted on the button housing 2204 instead of on the button 2202; in such embodiments, equivalent formations may be provided on the button body 2400 (instead of on the button housing 2204) to interact with the actuator member(s) 2203.

In the illustrated embodiment, the ends 2213, 2223 of the torsion wire 2203 touch the surfaces 1, 2. In other embodiments, there may be channels passing through, or more deeply into, the button housing 2204, and a tip/end of the wire 2203 may not touch the surfaces 1, 2, instead being beyond the surfaces 1, 2 - an end region adjacent the tip interacts with the formations 2241 in such embodiments, instead of the tip - the terms "end" or "end region" should therefore be interpreted accordingly, as not necessarily including the true ends/tips of the wire 2203 in some embodiments.

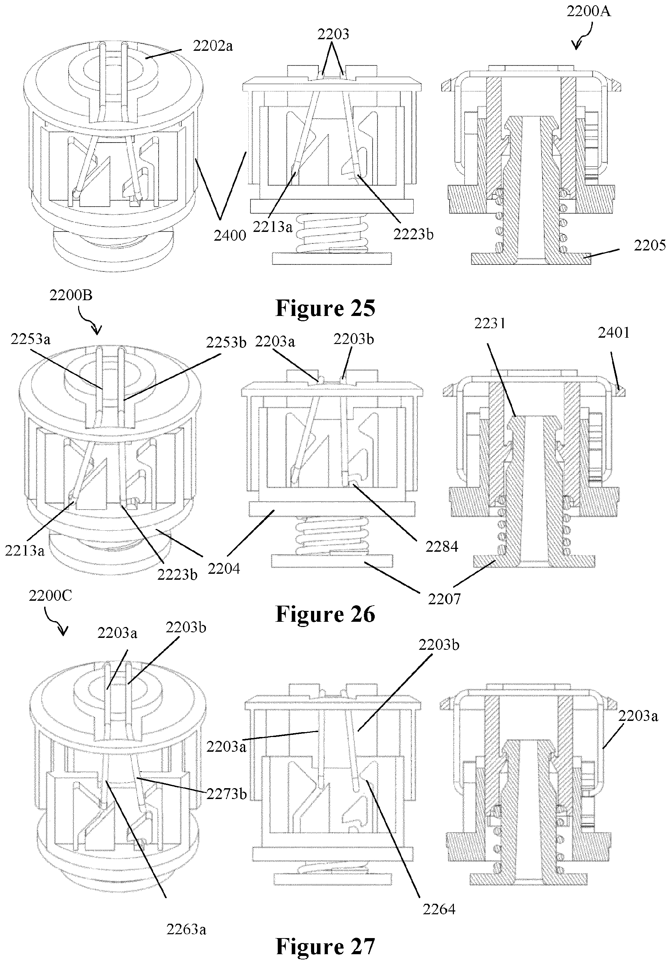

In the illustrated embodiment, the button housing 2204 has two flat, parallel sides extending in the longitudinal direction, as shown in Figure 29, labelled 1 and 2. Each of these sides comprises formations 2241 arranged to interact with the end regions 2213, 2223 of the torsion wire 2203. Each of these sides is arranged to interact with one end region (2213 or 2223) of each wire 2203 - therefore with a total of two end regions, one from each wire 2203a, 2203b (e.g. 2213a and 2223b, or 2213b and 2223a). The formations 2241 are arranged into two separate groupings - a left-hand side and a right-hand side, in the embodiment shown, in the orientation shown. Each wire 2203 interacts with both grouping types - one end of the wire with one grouping, and the other end of the wire with the other grouping. The visible end region 2213a of the wire 2203a in Figures 25 to 27 is arranged to interact with the left-hand side formations of the visible side of the button housing 2204, and the hidden end region 2223a of the wire 2203a in Figures 25 to 27 is arranged to interact with the left-hand side formations of the hidden side of the button housing 2204. The ends of the other wire 2203b interact with the respective right-hand side formations - each end 2213, 2223 of a given wire therefore interacts with different formations from the other end 2223, 2213 of the same wire. For ease of description, the ends 2223, 2213 are numbered to indicate which type of formation they interact with. "L" and "R" markers are used in Figure 29 to indicate the left- and right-hand sides of the push-button actuator from a selected view-point.

The formations 2241 are rotationally symmetric about the longitudinal direction, such that the button housing 2204 may be correctly installed in two different positions. In the embodiment shown, each set of formations 2241 comprises first and second ramps 2214, 2224, one for an end of each torsion wire 2203. The first ramp 2224 faces downward, in the orientation shown, such that the end 2213, 2223 of the torsion wire 2203 contacts it from below. The first ramp 2224 comprises a downwardly-directed protrusion 2254 in its upper end region, such that the end 2213, 2223 of the torsion wire 2203 has to move downward, below the protrusion 2254, in order to then move further upwards. The second ramp 2214 is steeper than the first 2224, and located to the left of the first ramp 2224 and above the first ramp 2224 in the embodiment shown. The second ramp 2214 takes the form of a channel, with lower and upper surfaces, such that an end of the wire 2203 may exert a force upwards or downwards on the ramp 2214 whilst sliding along it. At the lower end of the second ramp 2214, a vertical channel 2294 extends downwards (in the orientation shown). The second ramp 2214 is arranged to interact with the other actuator arm 2263, as compared to the first ramp 2224. A third ramp 2264 is also provided in the embodiment shown, the third ramp 2264 being arranged to interact with the same actuator arm 2273 as the first ramp 2224. The third ramp 2264 is located above and at least partially to the right of the first ramp 2224 in the embodiment shown, and is sloped in the opposite direction - whereas the first ramp rises from left to right in the orientation shown, the third ramp 2264 rises from right to left. The third ramp 2264 has at least substantially the same pitch as the first ramp 2224 in the embodiment shown. In the embodiment shown, the third ramp 2264 serves to guide the respective end of the wire back towards the next position in the cycle (Position C), as is described in more detail below.

A fourth ramp 2274 is also provided in the embodiment shown, the fourth ramp 2274 being arranged to interact with the same actuator arm 2273 as the first ramp 2224 and third ramp 2264. The fourth ramp 2274 is located above the first ramp 2224 in the embodiment shown, and is sloped in the same direction, but more steeply. The first and fourth ramps 2224, 2274 are provided by two sides of a single formation which also provides the protrusion 2254 in the embodiment shown. They may be provided by separate formations in other embodiments. The fourth ramp 2274 has a shallower slope than the second ramp 2214 in the embodiment shown. In the embodiment shown, the fourth ramp 2274 serves to guide the respective end of the wire back towards the next position in the cycle (Position A - completing the cycle), as is described in more detail below. The fourth ramp 2274 guides the end of the wire from the third ramp 2264 back towards the first ramp 2224.

The channel 2294 provides a spring/ torsion load on the other end of the wire 2203, to bias the end of the wire guided by the fourth ramp 2274 towards the stop 2284. The guided end of the wire is then held in the latched position (near the stop 2284 and held by the latching protrusion 2254) when the button 2202 is released.

In embodiments with only a single torsion wire 2203, fewer ramps (e.g. only a single ramp, or two ramps) may be included on each face 1, 2, and/or the formations 2241 may not be rotationally symmetric. It will be appreciated that the particular design of formations shown 2241 is provided by way of example only, and not intended to be limiting.

Each actuator member 2203a, 2203b has two ends 2213, 2223 - one end 2213 is arranged to interact with the first, third and fourth ramps 2224, 2264, 2274 on one side of the button housing 2204, and the other end 2223 is arranged to interact with the second ramp 2214 and the channel 2294 on the other side of the button housing 2204. The left-hand actuator member 2203a interacts with the left-hand groupings on each surface 1, 2 and the right-hand actuator member 2203b interacts with the right-hand groupings on each surface 1,2. The grouping on the left on one surface 1 is on the right of the other surface 2, as the surfaces 1,2 are positioned back to back. Each actuator member 2203 therefore interacts with all four ramp types during its movement.

The button housing 2204 also provides a ledge 2290 below the formations 2241, from which a stop 2284 protrudes upwards, below the first ramp 2224. The stop 2284 serves to prevent the wire 2203 from skipping past the latching protrusion 2254 (for latched position A described below) when the button 2202 is pressed in. Without the stop 2284, the relevant end of the wire could potentially move further towards the third ramp 2264, missing out the latched position.

In the embodiment shown, each set of formations 2241 (i.e. the set on surface 1 and the set on surface 2) comprises a channel 2294 extending from a lower end of the second ramp 2214 to the ledge 2290 - vertically in the embodiment and orientation shown. The skilled person would appreciate that many different shapes of formations 2241 may be used in other embodiments - the shape shown in Figures 25 to 27 and 29 is provided by way of example only.

As the button 2202 is pushed downwards with respect to the button housing 2204 (in the orientation shown) by the application of a force F, and then released so that the button 2202 moves upwards (in the orientation shown) under the biasing of the first and/or second biasing members, the ends of the wires 2203 interact with the inclined surfaces 2214, 2224, 2264, 2274 provided by the formations 2241, so causing the actuator arms 2263, 2273 to rotate.

The movement of the actuator 2200 of the illustrated embodiment is described in more detail with respect to Figures 25 to 27 - Figure 25 shows the position 2200A of the push-button actuator 2200 when one end 2223 of each actuator arm 2263a, b is caught at the top of the first ramp 2224 (the lowest of the ramps), held by the protrusion 2254, Figure 26 shows the position 2200B of the push-button actuator 2200 when that end 2223 of each actuator arm 2263 is located in or near its lowest position (in the orientation shown), near the ledge 2290, and Figure 27 shows the position 2200C of the push-button actuator 2200 when each end 2223a,b, 2213a,b of each actuator arm 2263a, b is out of contact with any of the formations 2241 (free, in or near its highest position in the orientation shown).

Position A is a latched position. In position A, as the button 2202 is biased upwards with respect to the button housing 2204, one end 2223a,b of each actuator arm 2263a, b is caught at the top of the respective first ramp 2224, held by the respective protrusion 2254 (i.e. the end 2223a of one actuator member 2203a interacts with the first ramp 2224 on a first side of the button housing 2204, and the end 2223b of the other actuator member 2203b interacts with the first ramp 2224 on a first side of the button housing 2204). The biasing urges the button 2202 further upwards, but the button 2202 cannot move further upwards without first moving downwards to move the end 2223 of each actuator arm 2263 past the protrusion 2254, and is therefore held in position. The other end 2213 of each actuator member 2203 is located at or near the bottom of the second ramp 2214, but is unable to move up the ramp as the button 2202 cannot move further upward due to the interaction of the other ends 2223a,b of the actuator members 2203a,b interacting with the first ramps 2224. As ends 2213 of the wires 2203 are free in this position in this embodiment, it will be appreciated that the button body 400 might tilt were there not a symmetrical pair of wires (e.g. in an embodiment with only one torsion wire 2203). However, the button body 400 may have a tight, sliding fit within the housing, so reducing or preventing tilting, in such embodiments. A single torsion wire may be used in some embodiments.

In the latched position A, the over-travel member 2205 is in contact with the arm (not shown), pushing the arm downwards. The biasing force between the over-travel member 2205 and the button 2202 (due to the spring 2207) pushes the button 2202 in the longitudinal direction away from the arm, so pushing the end of each actuator arm 2263 at the top of the first ramp 2224 against the ramp 2224 and the protrusion 2254, such that it cannot move past the protrusion 2254. The extent of compression of the spring 2207 in this positon will depend on the position of the arm relative to the over-travel member 2205. The compressive strength of the spring 2207 (or other biasing member(s) in other embodiments) may be selected as appropriate to ensure that the over-travel member 2205 can actuate the valve.

The corresponding rims 2231, 2401 of the button 2202 and over-travel member 2205 are not quite touching, but close, in the illustrated embodiment. In other embodiments, these rims 2231, 2402 may touch in the latched position.

In the embodiment shown, pushing the arm downwards (in the orientation shown - i.e. away from the contact surface 2202a) opens the valve / turns a flow of water on, so position A is the "on" position for the shower 100. In other embodiments, releasing the arm to allow it to move upwards (in the orientation shown) may open the valve, so making position A the "off' position of the shower 100.

To move between position A and position B, a force F in the longitudinal direction (downwards, in the embodiment shown) is applied to the contact surface 2202a. The applied force moves the button 2202 downwards (in the orientation shown). In the embodiment shown, the downwards movement is not limited by a lower surface of the button rim 2401 contacting an upper surface of the button housing 2204, but rather by an actuator arm 2263 making contact with a stop (not shown) located between the lower surface of the button rim 2401 and the upper surface of the button housing 2204. The button 2202 is therefore mainly within the button housing 2204 in position B. The longitudinal movement of the button 2202 brings the over-travel member 2205 further within the body 2400 of the button 2202, due to the non-moving arm compressing the spring 2207.

As the button 2202 moves longitudinally downwards (in the orientation shown), the first end 2223 of each actuator member 2203 moves down the first ramp 2224, rotating the respective arm 2273 as it does so, and the second end 2213 of each actuator member 2203 moves vertically downwards (in the orientation shown) within the channel 2294. The two arms 2263, 2273 of each torsion wire 2203 are therefore rotated with respect to each other, away from their rest position, in position B. The second end 2213b of the actuator member 2203b is not visible in Figure 26 as it is on the far side, behind the rest of the push-button actuator. This second end 2213b is held to the right, in the orientation of the push-button actuator marked in Figure 29, trapped in the channel 2294, so the first end 2223b (which is visible in Figure 26) is resultantly biased to the right, in the orientation shown, and therefore stopped by the stop 2284, which resists its rotation any further right. There is therefore torsion on the wire 2203.

Taking one wire 2203b as an example, in position B as shown in Figure 26, one end 2213b of the wire 2203b is unseen on the opposite, furthest, side of the apparatus, and is held to the right (as marked in Figure 29) by the channel 2294. The other end 2223b of the same wire 2203b "wants" to be in the same angular location with respect to the central, pivoting part 2253b of the wire 2203b, as the torsional strength of the wire 2203b resists twisting. However, the other end 2223b of the same wire 2203b cannot move to an equivalent angular position, because the stop 2284 prevents its movement to the right. The resultant force on the wire end 2223b urges the wire end 2223b to the right, against the stop 2284 beneath the first ramp 2224. Without this torsion in the wire 2203b, the end of the wire 2223b would not have moved underneath the first ramp 2224 - instead just moving downwards with the button 2202. The torsion on the wire therefore serves to move the respective end 2223b of the wire under the first ramp 2224.

Position B is the over-travel position of the push-button actuator 2200. The ends 2213, 2223 of the actuator arms 2263, 2273 are at their furthest downward (in the orientation shown) positions in position B. The over-travel member 1205 is also at its furthest downward (in the orientation shown) position in position B. The spring 2207 may be compressed further than in position A as the over-travel member 2205 is pushed upwards by the arm (which is already in its downward positon so cannot move further and instead compresses the spring 2207).

The force, F, is then released, and the push-button actuator 2200 moves to position C. As the force is released, the button 2202 returns upwards (in the orientation shown) under the biasing of the spring 2207, and the un-shown second biasing member. The third ramp 2264 guides the wire end 2223b back leftwards, to a more central/vertical position.

Once the downward force is released, the ends 2213 of the wires 2203 move up in the channel 2294, and then up along the ramp 2214, so causing the respective actuator arms 2263 to rotate back towards a more vertical position (in the orientation shown). The other ends 2223 of each actuator member 2203 may rotate further leftwards than shown, providing an at least approximately vertical position (in the orientation shown) for each wire 2203.

In various embodiments, a clip, stop, or the like (nor shown) provides an upper limit to movement of the button body 2400 with respect to the housing 1204. The skilled person would appreciate that any suitable design known in the art may be used, and/or that a stop may be provided by part of a product casing into which the push-button actuator is inserted rather than by the push-button actuator itself in some embodiments. The over-travel member 2205 therefore moves closer to the contact surface 2202a than in position A, reducing or removing the force on the arm, and thereby actuating the valve.

In the embodiment shown, reducing or releasing the force on the arm such that it can move upwards (in the orientation shown - i.e. towards the contact surface 2202a) closes the valve / turns a flow of water off, so position C is the "off' position for the shower 100. In other embodiments, depressing the arm may close the valve, so making position C the "on" position of the shower 100. The torsion wire 2203 is in, or near, its unstressed shape in position C, with no torsional forces acting, as the arms 2263, 2273 are in a vertical position or co-rotated away from a vertical positon rather than being pushed in opposite directions.

A second application of the same force, F, pushes the button 2202, and therefore the torsion wires 2203, downwards again, and causes the arms 2263, 2273 of each torsion wire 2203 to both move downwards and rotate. In particular, one arm 2263 of each wire 2203 is caused to rotate away from a central line of the button 2202 / to the left for the arm 2263a shown in the orientation shown by interaction with the second ramp 2214 as it descends. The other arm 2273 is caused to rotate towards a central line of the button 2202 / to the left for the arm 2263a shown in the orientation shown by interaction with the fourth ramp 2274 as it descends. This stresses each wire 2203 as its arms 2263, 2273 are rotated in opposite directions. When the other arm 2273 passes below the level of the fourth ramp 2274, it therefore rotates away from the central line / to the right in the orientation shown, and slides under the lower end of the first ramp 2224 to relieve that torsional stress, and until it reaches the protrusion 2254. The actuator members 203 have therefore returned to position A. The button 2202 is then locked in position A when the force, F, is released, as the interaction of the arm 2273 with the first ramp 2224 and protrusion 2254 prevents the button 2202 from moving further upwards, and the biasing of the first and second biasing members 2206, 2207 prevents it from moving downwards. The push-button actuator 2200 can therefore be cycled through positons A, B, and C.

In the embodiments 1200, 2200 described with respect to Figure 19 onwards, the second biasing member arranged to bias the button 1202, 2202 away from the button housing 1202, 2202 is described but not shown. The second biasing member may be a spring oriented along the longitudinal direction. The first biasing member 1207, 2207 is generally arranged to lie at least partially within the second biasing member in at least one of the locked positions.

Although the above embodiments have been described in relation to a shower 100 with an overhead showerhead 102, one or more push-button actuators 200 as described herein may be used in any ablutionary fitting with one or more outlet device. Not all the outlet devices are necessarily controlled by the same type of actuator.

## Claims

1. An ablutionary fitting controller (300) comprising a push-button actuator (200, 1200) arranged to mechanically actuate a valve so as to control a flow of water to an outlet, wherein the push-button actuator (200, 1200) comprises:
a button (202, 1202) comprising a contact surface (202a, 1202a), and arranged to be moved in a longitudinal direction by a force applied to the contact surface (202a, 1202a), the button (202, 1202) further comprising one or more surfaces (403) inclined with respect to the longitudinal direction;
a cam member (203) arranged to be pushed in the longitudinal direction by movement of the button (202, 1202), and comprising one or more surfaces inclined with respect to the longitudinal direction, wherein the inclined surfaces (403) of the button (202, 1202) are arranged to interact with the inclined surfaces of the cam member (203) so as to cause the cam member (203) to rotate as it is pushed in the longitudinal direction;
a button housing (204, 1204) at least partially surrounding the button (202, 1202) and cam member (203) and comprising one or more surfaces inclined with respect to the longitudinal direction and arranged to interact with the inclined surfaces of the cam member (203) so as to cause the cam member (203) to rotate as it moves in the longitudinal direction, and wherein, when the applied force is removed, the button housing (204, 1204) is arranged to hold the cam member (203) in either a first position in which the valve is open or a second position in which the valve is closed, depending on the angle of rotation of the cam member (203);
an over-travel member (205, 2205) mounted on the cam member (203) and extending beyond the cam member (203) in the longitudinal direction away from the contact surface (202a, 1202a) of the button (202, 1202), wherein the over-travel member (205, 2205) is arranged to push a valve connection member (302) in response to the applied force so as to mechanically actuate the valve;
a first biasing member (207, 1207, 2207) arranged to bias the over-travel member (205, 2205) in the longitudinal direction away from the contact surface (202a, 1202a) of the button (202, 1202); and
a second biasing member (206) arranged to bias the button (202, 1202) away from the button housing (204, 1204), wherein the first and second biasing members (206) are springs oriented along the longitudinal direction, and wherein the first biasing member (207, 1207, 2207) is arranged to lie at least partially within the second biasing member (206) in at least one of the first position and the second position,
**characterised in that** the second biasing member (206) is mounted between the button housing (204, 1204) and the button (202, 1202) and encircles at least a portion of the cam member (203).

2. The ablutionary fitting controller (300) of claim 1, wherein at least one of the following applies:
(i) the push-button actuator (200, 1200) is arranged to move the valve between a first position and a second position, to start and stop water flow to the outlet; and/or
(ii) the first biasing member (207, 1207, 2207) is arranged to bias the over-travel member (205, 2205) with respect to the cam member (203).

3. The ablutionary fitting controller (300) of claim 1 or claim 25, wherein the over-travel member (205, 2205) is biased away from the cam member (203) by the first biasing member (207, 1207, 2207); and/or wherein the first and second biasing members (206) are coaxial springs, the first biasing member (207, 1207, 2207) having a smaller diameter than the second.

4. The ablutionary fitting controller (300) of any preceding claim, wherein the button (202, 1202) is at least partially hollow and arranged to receive at least a portion of the cam member (203) therewithin.

5. The ablutionary fitting controller (300) of claim 4, wherein in the position in which the over-travel member (205, 2205) is arranged to push the valve connection member (302), the majority of the cam member (203) extends out of the button (202, 1202) towards the valve connection member (302), whereas in the position in which the valve connection member (302) is not arranged to be pushed by the over-travel member (205, 2205), the majority of the cam member (203) lies within the button (202, 1202).

6. The ablutionary fitting controller (300) of claim 4 or claim 5, wherein the cam member (203) has a lip (232) on an end region of the cam member (203) closest to the valve connection member (302), the lip (232) being arranged to prevent the whole of the cam member (203) from entering into the button (202, 1202), thereby limiting movement of the cam member (203) with respect to the button (202, 1202).

7. The ablutionary fitting controller (300) of any preceding claim, wherein the cam member (203) is at least partially hollow and arranged to receive at least a portion of the over-travel member (205, 2205) therewithin.

8. The ablutionary fitting controller (300) of claim 7, wherein in the position in which the valve connection member (302) is arranged to be pushed by the over-travel member (205, 2205), a smaller proportion of the over-travel member (205, 2205) extends out of the cam member (203) towards the valve connection member (302) than in the position in which the valve connection member (302) is not arranged to be pushed by the over-travel member (205, 2205).

9. The ablutionary fitting controller (300) of claim 7 or claim 8, wherein the over-travel member (205, 2205) has a lip (252) on an end region of the over-travel member (205, 2205) furthest from the contact surface (202a, 1202a) of the button, the lip (252) being arranged to prevent the whole of the over-travel member (205, 2205) from entering into the button (202, 1202) and/or into the cam member (203), thereby limiting movement of the over-travel member (205, 2205) with respect to the button (202, 1202).

10. The ablutionary fitting controller (300) of any of claims 7 to 9, wherein:
the cam member (203) comprises an inner rim (233) extending continuously around an inner circumference of the cam member (203); and
the over-travel member (205, 2205) comprises a rim (251) extending radially outward in the end region arranged to be closest to the contact surface (202a) in use,
and wherein the rim (251) is arranged to lie between the inner rim (233) of the cam member (203) and the contact surface (202a) in use such that contact between the rims (233, 251) prevents further movement of the over-travel member (205) relative to the cam member (203) in the direction away from the contact surface (202a) .

11. The ablutionary fitting controller (300) of any preceding claim, wherein at least one of the following applies:
(i) the first biasing member (207, 1207, 2207) is a coil spring encircling at least a portion of the length of the over-travel member (205, 2205) and lying at least partially within the cam member (203), and wherein optionally the over-travel member (205, 2205), first biasing member (207, 1207, 2207), and cam member (203) are coaxial, with the axis along the longitudinal direction; and/or
(ii) the cam member (203) comprises a cog-shaped portion (232) with a plurality of teeth (232a), each tooth (232a) providing one of the surfaces inclined with respect to the longitudinal direction, and wherein each inclined surface has an extent in the longitudinal direction of less than 50% of the tooth width in a circumferential direction.

12. The ablutionary fitting controller (300) of any preceding claim, wherein the button (202, 1202) and the button housing (204, 1204) are arranged not to rotate in use, whereas the cam member (203), the first biasing member (207, 1207, 2207), and the over-travel member (205, 2205) are arranged to rotate together, relative to the button (202, 1202) and button housing (204, 1204).

13. An ablutionary fitting comprising:
a body;
an outlet, the outlet having a valve arranged to open and close the outlet; and
an ablutionary fitting controller (300) as claimed in any preceding claim and arranged to actuate the valve.

14. The ablutionary fitting of claim 13, wherein the ablutionary fitting is a shower (100), and the push-button actuator (200) is arranged to control fluid flow through a showerhead (102) of the shower (100).

15. The ablutionary fitting of claim 13, wherein the ablutionary fitting is a tap, and the push-button actuator (200) is arranged to control fluid flow through the tap.

## Patentansprüche

1. Steuereinheit (300) für eine Wascharmatur, die einen Druckknopfaktuator (200, 1200) umfasst, der dazu ausgelegt ist, ein Ventil mechanisch zu betätigen, um einen Wasserfluss zu einem Auslass zu steuern, wobei der Druckknopf (200, 1200) Folgendes umfasst:
einen Knopf (202, 1202), der eine Kontaktfläche (202a, 1202a) umfasst und dazu ausgelegt ist, durch eine auf die Kontaktfläche (202a, 1202a) ausgeübte Kraft in einer Längsrichtung bewegt zu werden, wobei der Knopf (202, 1202) weiter eine oder mehrere Flächen (403) umfasst, die in Bezug auf die Längsrichtung geneigt sind;
ein Nockenelement (203), das dazu ausgelegt ist, durch die Bewegung des Knopfes (202, 1202) in die Längsrichtung gedrückt zu werden, und das eine oder mehrere Oberflächen umfasst, die in Bezug auf die Längsrichtung geneigt sind, wobei die geneigten Oberflächen (403) des Knopfes (202, 1202) dazu ausgelegt sind, mit den geneigten Oberflächen des Nockenelements (203) zusammenzuwirken, um das Nockenelement (203) zu veranlassen, sich zu drehen, wenn es in die Längsrichtung gedrückt wird;
ein Knopfgehäuse (204, 1204), das den Knopf (202, 1202) und das Nockenelement (203) zumindest teilweise umgibt und eine oder mehrere Flächen umfasst, die in Bezug auf die Längsrichtung geneigt und dazu ausgelegt sind, mit den geneigten Flächen des Nockenelements (203) zusammenzuwirken, um das Nockenelement (203) zu veranlassen, sich zu drehen, wenn es sich in der Längsrichtung bewegt, und wobei das Knopfgehäuse (204, 1204) dazu ausgelegt ist, das Nockenelement (203) in Abhängigkeit von dem Drehwinkel des Nockenelements (203) entweder in einer ersten Position, in der das Ventil offen ist, oder in einer zweiten Position, in der das Ventil geschlossen ist, zu halten, wenn die aufgebrachte Kraft entfernt wird;
ein Überhubelement (205, 2205), das an dem Nockenelement (203) angebracht ist und sich über das Nockenelement (203) hinaus in der Längsrichtung weg von der Kontaktfläche (202a, 1202a) des Knopfes (202, 1202) erstreckt, wobei das Überhubelement (205, 2205) dazu ausgelegt ist, ein Ventilverbindungselement (302) als Reaktion auf die aufgebrachte Kraft zu drücken, um das Ventil mechanisch zu betätigen;
ein erstes Vorspannelement (207, 1207, 2207), das dazu ausgelegt ist, das Überhubelement (205, 2205) in der Längsrichtung von der Kontaktfläche (202a, 1202a) des Knopfes (202, 1202) weg vorzuspannen; und
ein zweites Vorspannelement (206), das dazu ausgelegt ist, den Knopf (202, 1202) von dem Knopfgehäuse (204, 1204) weg vorzuspannen, wobei das erste und das zweite Vorspannelement (206) Federn sind, die entlang der Längsrichtung ausgerichtet sind, und wobei das erste Vorspannelement (207, 1207, 2207) dazu ausgelegt ist, zumindest teilweise innerhalb des zweiten Vorspannelementes (206) in zumindest einer der ersten Position und der zweiten Position zu liegen,
**dadurch gekennzeichnet, dass** das zweite Vorspannelement (206) zwischen dem Knopfgehäuse (204, 1204) und dem Knopf (202, 1202) angebracht ist und zumindest einen Teil des Nockenelements (203) umgibt.

2. Steuereinheit (300) für eine Wascharmatur nach Anspruch 1, wobei mindestens eines der Folgenden zutrifft:
(i) der Druckknopfaktuator (200, 1200) ist dazu ausgelegt, das Ventil zwischen einer ersten Position und einer zweiten Position zu bewegen, um den Wasserfluss zum Auslass zu starten und zu stoppen; und/oder
(ii) das erste Vorspannelement (207, 1207, 2207) ist dazu ausgelegt, das Überhubelement (205, 2205) in Bezug auf das Nockenelement (203) vorzuspannen.

3. Steuereinheit (300) für eine Wascharmatur nach Anspruch 1 oder Anspruch 25, wobei das Überhubelement (205, 2205) durch das erste Vorspannelement (207, 1207, 2207) von dem Nockenelement (203) weg vorgespannt ist; und/oder wobei das erste und das zweite Vorspannelement (206) koaxiale Federn sind, wobei das erste Vorspannelement (207, 1207, 2207) einen kleineren Durchmesser als das zweite aufweist.

4. Steuereinheit (300) für eine Wascharmatur nach einem vorstehenden Anspruch, wobei der Knopf (202, 1202) zumindest teilweise hohl ist und dazu ausgelegt ist, zumindest einen Teil des Nockenelements (203) darin aufzunehmen.

5. Steuereinheit (300) für eine Wascharmatur nach Anspruch 4, wobei in der Position, in der das Überhubelement (205, 2205) dazu ausgelegt ist, das Ventilverbindungselement (302) zu drücken, der größte Teil des Nockenelements (203) sich aus dem Knopf (202, 1202) in Richtung des Ventilverbindungselements (302) erstreckt, wohingegen in der Position, in der das Ventilverbindungselement (302) nicht dazu ausgelegt ist, durch das Überhubelement (205, 2205) gedrückt zu werden, der größte Teil des Nockenelements (203) innerhalb des Knopfes (202, 1202) liegt.

6. Steuereinheit (300) für eine Wascharmatur nach Anspruch 4 oder Anspruch 5, wobei das Nockenelement (203) eine Lippe (232) an einem Endbereich des Nockenelements (203) aufweist, der dem Ventilverbindungselement (302) am nächsten liegt, wobei die Lippe (232) dazu ausgelegt ist, zu verhindern, dass das gesamte Nockenelement (203) in den Knopf (202, 1202) eintritt, wodurch die Bewegung des Nockenelements (203) in Bezug auf den Knopf (202, 1202) begrenzt wird.

7. Steuereinheit (300) für eine Wascharmatur nach einem vorstehenden Anspruch, wobei das Nockenelement (203) zumindest teilweise hohl ist und dazu ausgelegt ist, zumindest einen Teil des Überhubelements (205, 2205) in sich aufzunehmen.

8. Steuereinheit (300) für eine Wascharmatur nach Anspruch 7, wobei sich in der Position, in der das Ventilverbindungselement (302) dazu ausgelegt ist, von dem Überhubelement (205, 2205) gedrückt zu werden, ein kleinerer Anteil des Überhubelements (205, 2205) aus dem Nockenelement (203) in Richtung des Ventilverbindungselements (302) erstreckt als in der Position, in der das Ventilverbindungselement (302) nicht dazu ausgelegt ist, von dem Überhubelement (205, 2205) gedrückt zu werden.

9. Steuereinheit (300) für eine Wascharmatur nach Anspruch 7 oder 8, wobei das Überhubelement (205, 2205) eine Lippe (252) an einem Endbereich des Überhubelements (205, 2205) aufweist, der am weitesten von der Kontaktfläche (202a, 1202a) des Knopfes entfernt ist, wobei die Lippe (252) dazu ausgelegt ist, zu verhindern, dass das gesamte Überhubelement (205, 2205) in den Knopf (202, 1202) und/oder in das Nockenelement (203) eintritt, wodurch die Bewegung des Überhubelements (205, 2205) in Bezug auf den Knopf (202, 1202) begrenzt wird.

10. Steuereinheit (300) für eine Wascharmatur nach einem der Ansprüche 7 bis 9, wobei:
das Nockenelement (203) einen Innenrand (233) umfasst, der sich kontinuierlich um einen Innenumfang des Nockenelements (203) erstreckt; und
das Überhubelement (205, 2205) einen Rand (251) umfasst, der sich in dem Endbereich radial nach außen erstreckt und dazu ausgelegt ist, im Gebrauch der Kontaktfläche (202a) am nächsten zu sein,
und wobei der Rand (251) dazu ausgelegt ist, im Gebrauch zwischen dem Innenrand (233) des Nockenelements (203) und der Kontaktfläche (202a) zu liegen, sodass der Kontakt zwischen den Rändern (233, 251) eine weitere Bewegung des Überhubelements (205) relativ zu dem Nockenelement (203) in der Richtung weg von der Kontaktfläche (202a) verhindert.

11. Steuereinheit (300) für eine Wascharmatur nach einem vorstehenden Anspruch, wobei mindestens eines der Folgenden zutrifft:
(i) das erste Vorspannelement (207, 1207, 2207) ist eine Spiralfeder, die zumindest einen Teil der Länge des Überhubelements (205, 2205) umgibt und zumindest teilweise innerhalb des Nockenelements (203) liegt, und wobei gegebenenfalls das Überhubelement (205, 2205), das erste Vorspannelement (207, 1207, 2207) und das Nockenelement (203) koaxial sind, wobei die Achse entlang der Längsrichtung verläuft; und/oder
(ii) das Nockenelement (203) umfasst einen zahnradförmigen Abschnitt (232) mit einer Vielzahl von Zähnen (232a), wobei jeder Zahn (232a) eine der Oberflächen bereitstellt, die in Bezug auf die Längsrichtung geneigt sind, und wobei jede geneigte Oberfläche eine Ausdehnung in der Längsrichtung von weniger als 50 % der Zahnbreite in einer Umfangsrichtung aufweist.

12. Steuereinheit (300) für eine Wascharmatur nach einem vorstehenden Anspruch, wobei der Knopf (202, 1202) und das Knopfgehäuse (204, 1204) dazu ausgelegt sind, sich im Gebrauch nicht zu drehen, wohingegen das Nockenelement (203), das erste Vorspannelement (207, 1207, 2207) und das Überhubelement (205, 2205) dazu ausgelegt sind, sich zusammen zu drehen, und zwar relativ zu dem Knopf (202, 1202) und dem Knopfgehäuse (204, 1204).

13. Wascharmatur, umfassend:
einen Körper;
einen Auslass, wobei der Auslass mit einem Ventil versehen ist, das dazu ausgelegt ist, den Auslass zu öffnen und zu schließen; und
eine Steuereinheit (300) für eine Wascharmatur nach einem der vorstehenden Ansprüche, die dazu ausgelegt ist, das Ventil zu betätigen.

14. Wascharmatur nach Anspruch 13, wobei die Wascharmatur eine Dusche (100) ist und der Druckknopfaktuator (200) dazu ausgelegt ist, den Flüssigkeitsstrom durch einen Duschkopf (102) der Dusche (100) zu steuern.

15. Wascharmatur nach Anspruch 13, wobei die Wascharmatur ein Wasserhahn ist und der Druckknopfaktuator (200) dazu ausgelegt ist, den Flüssigkeitsstrom durch den Wasserhahn zu steuern.

## Revendications

1. Dispositif de commande de robinetterie d'ablutions (300) comprenant un actionneur à bouton-poussoir (200, 1200) agencé pour actionner mécaniquement une vanne de manière à commander un écoulement d'eau vers une sortie, dans lequel l'actionneur à bouton-poussoir (200, 1200) comprend :
un bouton (202, 1202) comprenant une surface de contact (202a, 1202a), et agencé pour être déplacé dans une direction longitudinale par une force appliquée à la surface de contact (202a, 1202a), le bouton (202, 1202) comprenant en outre une ou plusieurs surfaces (403) inclinées par rapport à la direction longitudinale ;
un élément de came (203) agencé pour être poussé dans la direction longitudinale par un déplacement du bouton (202, 1202), et comprenant une ou plusieurs surfaces inclinées par rapport à la direction longitudinale, dans lequel les surfaces inclinées (403) du bouton (202, 1202) sont agencées pour interagir avec les surfaces inclinées de l'élément de came (203) de manière à amener l'élément de came (203) à tourner lorsqu'il est poussé dans la direction longitudinale ;
un boîtier de bouton (204, 1204) entourant au moins partiellement le bouton (202, 1202) et l'élément de came (203) et comprenant une ou plusieurs surfaces inclinées par rapport à la direction longitudinale et agencées pour interagir avec les surfaces inclinées de l'élément de came (203) de manière à amener l'élément de came (203) à tourner lorsqu'il se déplace dans la direction longitudinale, et dans lequel, lorsque la force appliquée est supprimée, le boîtier de bouton (204, 1204) est agencé pour maintenir l'élément de came (203) soit dans une première position dans laquelle la vanne est ouverte, soit dans une seconde position dans laquelle la vanne est fermée, en fonction de l'angle de rotation de l'élément de came (203) ;
un élément de surcourse (205, 2205) monté sur l'élément de came (203) et s'étendant au-delà de l'élément de came (203) dans la direction longitudinale en s'éloignant de la surface de contact (202a, 1202a) du bouton (202, 1202), dans lequel l'élément de surcourse (205, 2205) est agencé pour pousser un élément de raccordement de vanne (302) en réponse à la force appliquée de manière à actionner mécaniquement la vanne ;
un premier élément de sollicitation (207, 1207, 2207) agencé pour solliciter l'élément de surcourse (205, 2205) dans la direction longitudinale à distance de la surface de contact (202a, 1202a) du bouton (202, 1202) ; et
un second élément de sollicitation (206) agencé pour solliciter le bouton (202, 1202) à distance du boîtier de bouton (204, 1204), dans lequel les premier et second éléments de sollicitation (206) sont des ressorts orientés le long de la direction longitudinale, et dans lequel le premier l'élément de sollicitation (207, 1207, 2207) est agencé pour reposer au moins partiellement à l'intérieur du second élément de sollicitation (206) dans au moins l'une de la première position et de la seconde position,
**caractérisé en ce que** le second élément de sollicitation (206) est monté entre le boîtier de bouton (204, 1204) et le bouton (202, 1202) et encercle au moins une partie de l'élément de came (203).

2. Dispositif de commande de robinetterie d'ablutions (300) selon la revendication 1, dans lequel au moins l'une des conditions suivantes s'applique :
(i) l'actionneur à bouton-poussoir (200, 1200) est agencé pour déplacer la vanne entre une première position et une seconde position, pour faire couler et couper un écoulement d'eau vers la sortie ; et/ou
(ii) le premier élément de sollicitation (207, 1207, 2207) est agencé pour solliciter l'élément de surcourse (205, 2205) par rapport à l'élément de came (203).

3. Dispositif de commande de robinetterie d'ablutions (300) selon la revendication 1 ou la revendication 25, dans lequel l'élément de surcourse (205, 2205) est sollicité à distance de l'élément de came (203) par le premier élément de sollicitation (207, 1207, 2207) ; et/ou dans lequel les premier et second éléments de sollicitation (206) sont des ressorts coaxiaux, le premier élément de sollicitation (207, 1207, 2207) présentant un diamètre plus petit que le second.

4. Dispositif de commande de robinetterie d'ablutions (300) selon une quelconque revendication précédente, dans lequel le bouton (202, 1202) est au moins partiellement creux et agencé pour recevoir au moins une partie de l'élément de came (203) à l'intérieur de celui-ci.

5. Dispositif de commande de robinetterie d'ablutions (300) selon la revendication 4, dans lequel dans la position dans laquelle l'élément de surcourse (205, 2205) est agencé pour pousser l'élément de raccordement de vanne (302), la majorité de l'élément de came (203) s'étend hors du bouton (202, 1202) vers l'élément de raccordement de vanne (302), tandis que dans la position dans laquelle l'élément de raccordement de vanne (302) n'est pas agencé pour être poussé par l'élément de surcourse (205, 2205), la majorité de l'élément de came (203) se trouve à l'intérieur du bouton (202, 1202).

6. Dispositif de commande de robinetterie d'ablutions (300) selon la revendication 4 ou la revendication 5, dans lequel l'élément de came (203) présente une lèvre (232) sur une région d'extrémité de l'élément de came (203) la plus proche de l'élément de raccordement de vanne (302), la lèvre (232) étant agencée pour empêcher la totalité de l'élément de came (203) d'entrer dans le bouton (202, 1202), limitant ainsi un déplacement de l'élément de came (203) par rapport au bouton (202, 1202).

7. Dispositif de commande de robinetterie d'ablutions (300) selon une quelconque revendication précédente, dans lequel l'élément de came (203) est au moins partiellement creux et agencé pour recevoir au moins une partie de l'élément de surcourse (205, 2205) à l'intérieur de celui-ci.

8. Dispositif de commande de robinetterie d'ablutions (300) selon la revendication 7, dans lequel dans la position dans laquelle l'élément de raccordement de vanne (302) est agencé pour être poussé par l'élément de surcourse (205, 2205), une plus petite proportion de l'élément de surcourse (205, 2205) s'étend hors de l'élément de came (203) vers l'élément de raccordement de vanne (302) que dans la position dans laquelle l'élément de raccordement de vanne (302) n'est pas agencé pour être poussé par l'élément de surcourse (205, 2205).

9. Dispositif de commande de robinetterie d'ablutions (300) selon la revendication 7 ou la revendication 8, dans lequel l'élément de surcourse (205, 2205) présente une lèvre (252) sur une région d'extrémité de l'élément de surcourse (205, 2205) la plus éloignée de la surface de contact (202a, 1202a) du bouton, la lèvre (252) étant agencée pour empêcher la totalité de l'élément de surcourse (205, 2205) de pénétrer dans le bouton (202, 1202) et/ou dans l'élément de came (203), limitant ainsi un déplacement de l'élément de surcourse (205, 2205) par rapport au bouton (202, 1202).

10. Dispositif de commande de robinetterie d'ablutions (300) selon l'une quelconque des revendications 7 à 9, dans lequel :
l'élément de came (203) comprend un rebord interne (233) s'étendant en continu sur une circonférence interne de l'élément de came (203) ; et
l'élément de surcourse (205, 2205) comprend un rebord (251) s'étendant radialement vers l'extérieur dans la région d'extrémité agencée pour être la plus proche de la surface de contact (202a) en utilisation,
et dans lequel le rebord (251) est agencé pour se situer entre le rebord interne (233) de l'élément de came (203) et la surface de contact (202a) en utilisation, de telle sorte qu'un contact entre les rebords (233, 251) empêche un déplacement supplémentaire de l'élément de surcourse (205) par rapport à l'élément de came (203) dans la direction opposée à la surface de contact (202a).

11. Dispositif de commande de robinetterie d'ablutions (300) selon une quelconque revendication précédente, dans lequel au moins l'une des conditions suivantes s'applique :
(i) le premier élément de sollicitation (207, 1207, 2207) est un ressort hélicoïdal encerclant au moins une partie de la longueur de l'élément de surcourse (205, 2205) et se trouvant au moins partiellement à l'intérieur de l'élément de came (203), et dans lequel facultativement l'élément de surcourse (205, 2205), le premier élément de sollicitation (207, 1207, 2207) et l'élément de came (203) sont coaxiaux, l'axe étant le long de la direction longitudinale ; et/ou
(ii) l'élément de came (203) comprend une partie en forme de pignon (232) avec une pluralité de dents (232a), chaque dent (232a) fournissant l'une des surfaces inclinées par rapport à la direction longitudinale, et dans lequel chaque surface inclinée présente une étendue dans la direction longitudinale inférieure à 50 % de la largeur de dent dans une direction circonférentielle.

12. Dispositif de commande de robinetterie d'ablutions (300) selon une quelconque revendication précédente, dans lequel le bouton (202, 1202) et le boîtier de bouton (204, 1204) sont agencés pour ne pas tourner en utilisation, tandis que l'élément de came (203), le premier élément de sollicitation (207, 1207, 2207) et l'élément de surcourse (205, 2205) sont agencés pour tourner ensemble, par rapport au bouton (202, 1202) et au boîtier de bouton (204, 1204).

13. Robinetterie d'ablutions comprenant :
un corps ;
une sortie, la sortie présentant une vanne agencée pour ouvrir et fermer la sortie ; et
un dispositif de commande de robinetterie d'ablutions (300) selon une quelconque revendication précédente et agencé pour actionner la vanne.

14. Robinetterie d'ablutions selon la revendication 13, dans laquelle la robinetterie d'ablutions est une douche (100), et l'actionneur à bouton-poussoir (200) est agencé pour commander un écoulement de fluide à travers une pomme de douche (102) de la douche (100).

15. Robinetterie d'ablutions selon la revendication 13, dans laquelle la robinetterie d'ablutions est un robinet, et l'actionneur à bouton-poussoir (200) est agencé pour commander un écoulement de fluide à travers le robinet.
